# EUROPEAN PATENT SPECIFICATION

(11) **EP 3 803 607 B1**
(45) Date of publication and mention of the grant of the patent: **23.07.2025**
(21) Application number: 19814144.2
(22) Date of filing: 05.06.2019
(51) Int. Cl.: G06F 13/00, G06F 15/16, G06F 16/957

(54) **REAL-TIME DATA ACQUISITION AND RECORDING DATA SHARING SYSTEM**
ECHTZEITDATENERFASSUNGS- UND AUFZEICHNUNGSSYSTEM MIT GEMEINSAMER DATENNUTZUNG
SYSTÈME DE PARTAGE DE DONNÉES D'ACQUISITION ET D'ENREGISTREMENT DE DONNÉES EN TEMPS RÉEL

(30) Priority: 05.06.2018 US 201862680907 P; 04.06.2019 US 201916431466; 29.03.2019 US 201962825943 P
(43) Date of publication of application: 14.04.2021
(73) Proprietor: WI-Tronix, LLC, Bolingbrook, IL 60440 (US)
(72) Inventor: JORDAN, Lawrence, B., Bolingbrook, IL 60440 (US); DINESH, Divya, Bolingbrook, IL 60440 (US); HAMSMITH, Matthew, D., Bolingbrook, IL 60440 (US); ALWIN, Dan, Bolingbrook, IL 60440 (US)
(74) Representative: Haseltine Lake Kempner LLP
(86) International application number: PCT/US2019/035606
(87) International publication number: WO 2019/236719

(56) References cited:
- KR-A- 20140 105 881
- KR-B1- 101 481 051
- US-A1- 2002 184 485
- US-A1- 2003 093 218
- US-A1- 2004 039 614
- US-A1- 2006 071 783
- US-A1- 2012 105 637
- US-A1- 2014 189 820
- CHI JEONGHEE ET AL: "The architecture for vehicular black-box image communication in VANET", 2014 SIXTH INTERNATIONAL CONFERENCE ON UBIQUITOUS AND FUTURE NETWORKS (ICUFN), IEEE, 8 July 2014 (2014-07-08), pages 483 - 488, XP032627893, DOI: 10.1109/ICUFN.2014.6876839

## Description

### CROSS-REFERENCE TO RELATED APPLICATION(S)

This application claims priority to U.S. Provisional Application No. 62/680,907, filed June 5, 2018, claims priority to and is a continuation-in-part of U.S. Provisional Application No. 62/825,943, filed March 29, 2019, claims priority to and is a continuation-in-part of U.S. Provisional Application No. 62/337,227, filed May 16, 2016, claims priority to and is a continuation-in-part of U.S. Non-provisional Application No. 16/595,650, filed May 15, 2017, now U.S. Patent No. 9,934,623, issued April 3, 2018, claims priority to and is a continuation-in-part of U.S. Non-provisional Application No. 15/907,486, filed February 28, 2018, claims priority to and is a continuation-in-part of U.S. Provisional Application No. 62/337,225, filed May 16, 2016, claims priority to and is a continuation-in-part of U.S. Non-provisional Application No. 15/595,689, filed May 15, 2017, claims priority to and is a continuation-in-part of U.S. Provisional Application No. 62/337,228, filed May 16, 2016, and claims priority to and is a continuation-in-part of U.S. Non-provisional Application No. 15/595,712, filed May 15, 2017, to the extent allowed by law.

### TECHNICAL FIELD

This disclosure relates to a system and method for viewing video, images, and data from a real-time data acquisition and recording system and sharing the video, images, and/or data with other individuals.

### BACKGROUND

High value mobile assets such as locomotives, aircraft, mass transit systems, mining equipment, transportable medical equipment, cargo, marine vessels, and military vessels typically employ onboard data acquisition and recording "black box" systems. These data acquisition and recording systems, such as event data recorders or flight data recorders, log a variety of system parameters used for incident investigation, crew performance evaluation, fuel efficiency analysis, maintenance planning, and predictive diagnostics. A typical data acquisition and recording system comprises digital and analog inputs, as well as pressure switches and pressure transducers, which record data from various onboard sensor devices. Recorded data may include such parameters as speed, distance traveled, location, fuel level, engine revolution per minute (RPM), fluid levels, operator controls, pressures, current and forecasted weather conditions and ambient conditions. In addition to the basic event and operational data, video and audio event/data recording capabilities are also deployed on many of these same mobile assets. Typically, data is extracted from data recorders, after an incident has occurred involving an asset and investigation is required, once the data recorder has been recovered. Certain situations may arise where the data recorder cannot be recovered or the data is otherwise unavailable. In these situations, the data, such as event and operational data, video data, and audio data, acquired by the data acquisition and recording system is needed promptly regardless of whether physical access to the data acquisition and recording system or the data is unavailable and allows users to share the data, or portions thereof, with other authorized individuals.

CHI JEONGHEE ET AL: "The architecture for vehicular black-box image communication in VANET", describes an architecture for vehicular black-box image communication which minimizes communicational and computation overheads by GPS based key frame extraction and communication technique.

KR101481051 describes a personal black box. An image is captured in response to various risks of a user based on measurements from sensors. Images provide information on a dangerous situation of the user.

### SUMMARY

This disclosure relates generally to real-time data acquisition and recording systems used in high value mobile assets. The teachings herein can provide real-time, or near real-time, access to data, such as event and operational data, video data, and audio data, recorded by a real-time data acquisition and recording system. One implementation of a method for processing, storing, and transmitting data from at least one asset includes receiving, using a web server, a request from a first user, the request comprising specified data stored in a remote data repository and an email address of a second user; determining a uniform resource locator (URL) adapted to provide access to the specified data; generating an email comprising the URL; and sending the email to the email address.

Another implementation of a system for processing, storing, and transmitting data from at least one asset includes a web server adapted to receive a request from a first user, determine a uniform resource locator (URL) to provide access to the specified data, generate an email comprising the URL, and send the email to the email address, the request comprising specified data stored in a remote data repository and an email address of a second user; and a data recorder onboard the mobile asset comprising at least one local memory component, a data encoder, an onboard data manager, and a queueing repository, the data recorder adapted to receive data based on at least one data signal from at least one of at least one data source onboard the mobile asset and at least one data source remote from the mobile asset, and the data encoder adapted to encode the data into encoded data.

These and other aspects of the present disclosure are disclosed in the following detailed description of the embodiments, the appended claims and the accompanying figures.

The object of the invention is solved by the features of the independent claims. Further embodiments are the subject-matter of the dependent claims.

### BRIEF DESCRIPTION OF THE DRAWINGS

The various features, advantages, and other uses of the apparatus will become more apparent by referring to the following detailed description and drawings, wherein like reference numerals refer to like parts throughout the several views. It is emphasized that, according to common practice, the various features of the drawings are not to-scale. On the contrary, the dimensions of the various features are arbitrarily expanded or reduced for clarity.
FIG. 1 illustrates a field implementation of a first embodiment of an exemplary real-time data acquisition and recording system in accordance with implementations of this disclosure;
FIG. 2 illustrates a field implementation of a second embodiment of the exemplary real-time data acquisition and recording system in accordance with implementations of this disclosure;
FIG. 3 is a flow diagram of a process for recording data and/or information from a mobile asset in accordance with implementations of this disclosure;
FIG. 4 is a flow diagram of a process for appending data and/or information from the mobile asset after a power outage in accordance with implementations of this disclosure;
FIG. 5 is a diagram that illustrates exemplary interim record blocks and full record blocks saved to a crash hardened memory module in accordance with implementations of this disclosure;
FIG. 6 is a diagram that illustrates exemplary interim record blocks in the crash hardened memory module prior to a power outage and after restoration of power in accordance with implementations of this disclosure;
FIG. 7 is a diagram that illustrates an exemplary record segment in the crash hardened memory module after power has been restored in accordance with implementations of this disclosure;
FIG. 8 illustrates a field implementation of a first embodiment of a real-time data acquisition and recording system viewer in accordance with implementations of this disclosure;
FIG. 9 is a flow diagram of a process for recording video data, audio data, and/or information from a mobile asset in accordance with implementations of this disclosure;
FIG. 10 is a flow diagram of a process for recording video data, audio data, and/or information from the mobile asset in accordance with implementations of this disclosure;
FIG. 11 is a flow diagram that illustrates an exemplary fisheye view of a 360 degrees camera of the real-time data acquisition and recording system viewer in accordance with implementations of this disclosure;
FIG.12 is a diagram that illustrates an exemplary panorama view of the 360 degrees camera of the real-time data acquisition and recording system viewer in accordance with implementations of this disclosure;
FIG. 13 is a diagram that illustrates an exemplary quad view of the 360 degrees camera of the real-time data acquisition and recording system viewer in accordance with implementations of this disclosure;
FIG. 14 is a diagram that illustrates an exemplary dewarped view of the 360 degrees camera of the real-time data acquisition and recording system viewer in accordance with implementations of this disclosure;
FIG. 15 illustrates a field implementation of a first embodiment of a data acquisition and recording system video content analysis system in accordance with implementations of this disclosure;
FIG. 16A is a diagram that illustrates exemplary track detection in accordance with implementations of this disclosure;
FIG. 16B is a diagram that illustrates exemplary track detection and switch detection in accordance with implementations of this disclosure;
FIG. 16C is a diagram that illustrates exemplary track detection, count the number of tracks, and signal detection in accordance with implementations of this disclosure;
FIG. 16D is a diagram that illustrates exemplary crossing and track detection in accordance with implementations of this disclosure;
FIG. 16E is a diagram that illustrates exemplary dual overhead signal detection in accordance with implementations of this disclosure;
FIG. 16F is a diagram that illustrates exemplary multi-track detection in accordance with implementations of this disclosure;
FIG. 16G is a diagram that illustrates exemplary switch and track detection in accordance with implementations of this disclosure;
FIG. 16H is a diagram that illustrates exemplary switch detection in accordance with implementations of this disclosure;
FIG. 17 is a flow diagram of a process for determining an internal status of the mobile asset in accordance with implementations of this disclosure;
FIG. 18 is a flow diagram of a process for determining object detection and obstruction detection occurring externally to the mobile asset in accordance with implementations of this disclosure;
FIG. 19 illustrates a field implementation of the first embodiment of the exemplary real-time data acquisition and recording system in accordance with implementations of this disclosure;
FIG. 20 illustrates a field implementation of the second embodiment of the exemplary real-time data acquisition and recording system in accordance with implementations of this disclosure; and
FIG. 21 is a flow diagram of a process for sharing data and/or information from the asset in accordance with implementations of this disclosure.

### DETAILED DESCRIPTION

A first embodiment of a real-time data acquisition and recording system described herein provides real-time, or near real-time, access to a wide range of data, such as event and operational data, video data, and audio data, related to a high value asset to remotely located users such as asset owners, operators and investigators. The data acquisition and recording system records data, via a data recorder, relating to the asset and streams the data to a remote data repository and remotely located users prior to, during, and after an incident has occurred. The data is streamed to the remote data repository in real-time, or near real-time, making information available at least up to the time of an incident or emergency situation, thereby virtually eliminating the need to locate and download the "black box" in order to investigate an incident involving the asset and eliminating the need to interact with the data recorder on the asset to request a download of specific data, to locate and transfer files, and to use a custom application to view the data. The system of the present disclosure retains typical recording capability and adds the ability to stream data to a remote data repository and remote end user prior to, during, and after an incident. **In** the vast majority of situations, the information recorded in the data recorder is redundant and not required as data has already been acquired and stored in the remote data repository.

Prior to the system of the present disclosure, data was extracted from the "black box" or "event recorder" after an incident had occurred and an investigation was required. Data files containing time segments recorded by the "black box" had to be downloaded and retrieved from the "black box" and then viewed by a user with proprietary software. The user would have to obtain physical or remote access to the asset, select the desired data to be downloaded from the "black box," download the file containing the desired information to a computing device, and locate the appropriate file with the desired data using a custom application that operates on the computing device. The system of the present disclosure has eliminated the need for the user to perform these steps, only requiring the user to use a common web browser to navigate to the desired data. The remotely located user may access a common web browser to navigate to desired data relating to a selected asset to view and analyze the operational efficiency and safety of assets in real-time or near real-time.

The remotely located user, such as an asset owner, operator, and/or investigator, may access a common web browser to navigate to live and/or historic desired data relating to a selected asset to view and analyze the operational efficiency and safety of assets in real-time or near real-time. The ability to view operations in real-time, or near real-time, enables rapid evaluation and adjustment of behavior. During an incident, for example, real-time information and/or data can facilitate triaging the situation and provide valuable information to first responders. During normal operation, for example, near real-time information and/or data can be used to audit crew performance and to aid network wide situational awareness.

Data may include, but is not limited to, analog and frequency parameters such as speed, pressure, temperature, current, voltage, and acceleration which originate from the asset and/or nearby assets, Boolean data such as switch positions, actuator position, warning light illumination, and actuator commands, global positioning system (GPS) data and/or geographic information system (GIS) data such as position, speed, and altitude, internally generated information such as the regulatory speed limit for an asset given its current position, video and image information from cameras located at various locations in, on or in the vicinity of the asset, audio information from microphones located at various locations in, on or in vicinity of the asset, information about the operational plan for the asset that is sent to the asset from a data center such as route, schedule, and cargo manifest information, information about the environmental conditions, including current and forecasted weather conditions, of the area in which the asset is currently operating in or is planned to operate in, asset control status and operational data generated by systems such as positive train control (PTC) in locomotives, and data derived from a combination from any of the above including, but not limited to, additional data, video, and audio analysis and analytics.

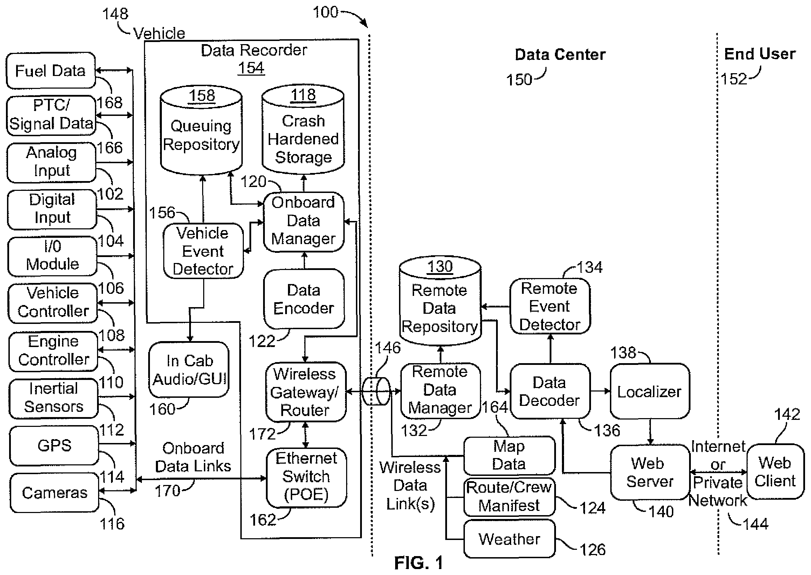

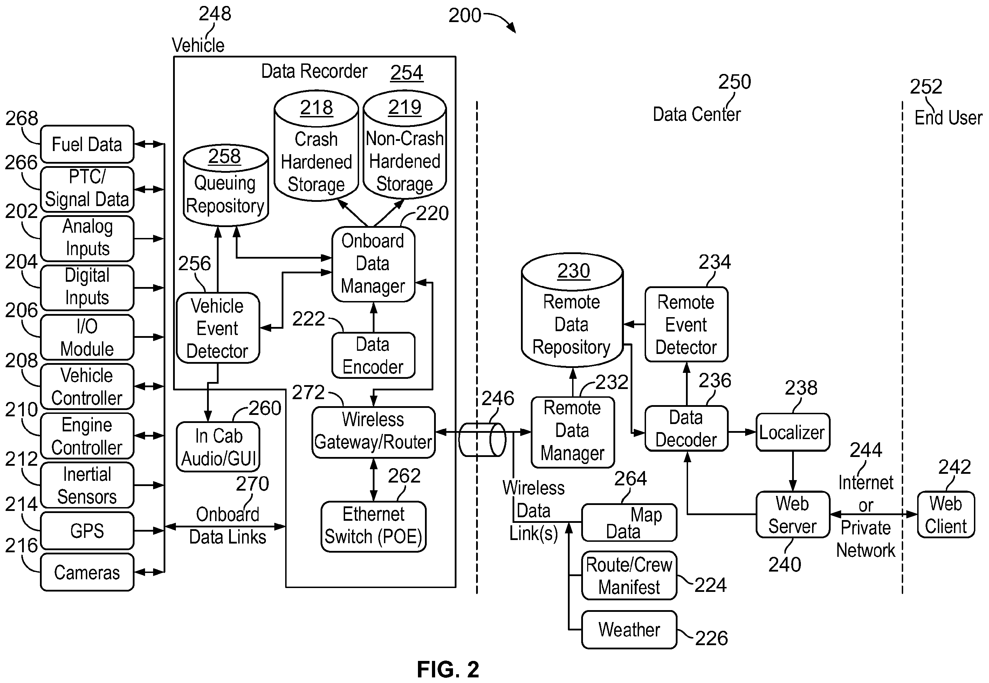

FIGS. 1 and 2 illustrate a field implementation of a first embodiment and a second embodiment, respectively, of an exemplary real-time data acquisition and recording system (DARS) 100, 200 in which aspects of the disclosure can be implemented. DARS 100, 200 is a system that delivers real time information to remotely located end users from a data recording device. DARS 100, 200 includes a data recorder 154, 254 that is installed on a vehicle or mobile asset 148, 248 and communicates with any number of various information sources through any combination of onboard wired and/or wireless data links 170, 270, such as a wireless gateway/router, or off board information sources via a data center 150, 250 of DARS 100, 200 via data links such as wireless data links 146. Data recorder 154, 254 comprises an onboard data manager 120, 220, a data encoder 122, 222, a vehicle event detector 156, 256, a queueing repository 158, 258, and a wireless gateway/router 172, 272. Additionally, in this implementation, data recorder 154, 254 can include a crash hardened memory module 118, 218 and/or an Ethernet switch 162, 262 with or without power over Ethernet (POE). An exemplary hardened memory module 118, 218 can be, for example, a crashworthy event recorder memory module that complies with the Code of Federal Regulations and the Federal Railroad Administration regulations, a crash survivable memory unit that complies with the Code of Federal Regulations and the Federal Aviation Administration regulations, a crash hardened memory module in compliance with any applicable Code of Federal Regulations, or any other suitable hardened memory device as is known in the art. In the second embodiment, shown in FIG. 2, the data recorder 254 can further include an optional non-crash hardened removable storage device 219.

The wired and/or wireless data links 170, 270 can include any one of or combination of discrete signal inputs, standard or proprietary Ethernet, serial connections, and wireless connections. Ethernet connected devices may utilize the data recorder's 154, 254 Ethernet switch 162, 262 and can utilize POE. Ethernet switch 162, 262 may be internal or external and may support POE. Additionally, data from remote data sources, such as a map component 164, 264, a route/crew manifest component 124, 224, and a weather component 126, 226 in the implementation of FIGS. 1 and 2, is available to the onboard data manager 120, 220 and the vehicle event detector 156, 256 from the data center 150, 250 through the wireless data link 146, 246 and the wireless gateway/router 172, 272.

Data recorder 154, 254 gathers data or information from a wide variety of sources, which can vary widely based on the asset's configuration, through onboard data links 170, 270. The data encoder 122, 222 encodes at least a minimum set of data that is typically defined by a regulatory agency. In this implementation, the data encoder 122, 222 receives data from a wide variety of asset 148, 248 sources and data center 150, 250 sources. Information sources can include any number of components in the asset 148, 248, such as any of analog inputs 102, 202, digital inputs 104, 204, I/O module 106, 206, vehicle controller 108, 208, engine controller 110, 210, inertial sensors 112, 212, global positioning system (GPS) 114, 214, cameras 116, 216, positive train control (PTC)/signal data 166, 266, fuel data 168, 268, cellular transmission detectors (not shown), internally driven data and any additional data signals, and any number of components in the data center 150, 250, such as any of the route/crew manifest component 124, 224, the weather component 126, 226, the map component 164, 264, and any additional data signals. The data encoder 122, 222 compresses or encodes the data and time synchronizes the data in order to facilitate efficient real-time transmission and replication to a remote data repository 130, 230. The data encoder 122, 222 transmits the encoded data to the onboard data manager 120, 220 which then saves the encoded data in the crash hardened memory module 118, 218 and the queuing repository 158, 258 for replication to the remote data repository 130, 230 via a remote data manager 132, 232 located in the data center 150, 250. Optionally, the onboard data manager 120, 220 can save a tertiary copy of the encoded data in the non-crash hardened removable storage device 219 of the second embodiment shown in FIG. 2. The onboard data manager 120, 220 and the remote data manager 132, 232 work in unison to manage the data replication process. A single remote data manager 132, 232 in the data center 150, 250 can manage the replication of data from a plurality of assets 148, 248.

The data from the various input components and data from an in-cab audio/graphic user interface (GUI) 160, 260 are sent to a vehicle event detector 156, 256. The vehicle event detector 156, 256 processes the data to determine whether an event, incident or other predefined situation involving the asset 148, 248 has occurred. When the vehicle event detector 156, 256 detects signals that indicate a predefined event occurred, the vehicle event detector 156, 256 sends the processed data that a predefined event occurred along with supporting data surrounding the predefined event to the onboard data manager 120, 220. The vehicle event detector 156, 256 detects events based on data from a wide variety of sources, such as the analog inputs 102, 202, the digital inputs 104, 204, the I/O module 106, 206, the vehicle controller 108, 208, the engine controller 110, 210, the inertial sensors 112, 212, the GPS 114, 214, the cameras 116, 216, the route/crew manifest component 124, 224, the weather component 126, 226, the map component 164, 264, the PTC/signal data 166, 266, and the fuel data 168, 268, which can vary based on the asset's configuration. When the vehicle event detector 156, 256 detects an event, the detected asset event information is stored in a queuing repository 158, 258 and can optionally be presented to the crew of the asset 148, 248 via the in-cab audio/graphical user interface (GUI) 160, 260.

The onboard data manager 120, 220 also sends data to the queuing repository 158. In near real-time mode, the onboard data manager 120, 220 stores the encoded data received from the data encoder 122, 222 and any event information in the crash hardened memory module 118, 218 and in the queueing repository 158, 258. In the second embodiment of FIG. 2, the onboard data manager 220 can optionally store the encoded data in the non-crash hardened removable storage device 219. After five minutes of encoded data has accumulated in the queuing repository 158, 258, the onboard data manager 120, 220 stores the five minutes of encoded data to the remote data repository 130, 230 via the remote data manager 132, 232 in the data center 150, 250 over the wireless data link 146, 246 accessed through the wireless gateway/router 172, 272. In real-time mode, the onboard data manager 120, 220 stores the encoded data received from the data encoder 122, 222 and any event information to the crash hardened memory module 118, 218, and optionally in the non-crash hardened removable storage device 219 of FIG. 2, and to the remote data repository 130, 230 via the remote data manager 132, 232 in the data center 150, 250 over the wireless data link 146, 246 accessed through the wireless gateway/router 172, 272. The onboard data manager 120, 220 and the remote data manager 132, 232 can communicate over a variety of wireless communications links, such as Wi-Fi, cellular, satellite, and private wireless systems utilizing the wireless gateway/router 172, 272. Wireless data link 146, 246 can be, for example, a wireless local area network (WLAN), wireless metropolitan area network (WMAN), wireless wide area network (WWAN), a private wireless system, a cellular telephone network or any other means of transferring data from the data recorder 154, 254 of DARS 100, 200 to, in this example, the remote data manager 130, 230 of DARS 100, 200. When a wireless data connection is not available, the data is stored in memory and queued in queueing repository 158, 258 until wireless connectivity is restored and the data replication process can resume.

In parallel with data recording, data recorder 154, 254 continuously and autonomously replicates data to the remote data repository 130, 230. The replication process has two modes, a real-time mode and a near real-time mode. In real-time mode, the data is replicated to the remote data repository 130, 230 every second. In near real-time mode, the data is replicated to the remote data repository 130, 230 every five minutes. The rate used for near real-time mode is configurable and the rate used for real-time mode can be adjusted to support high resolution data by replicating data to the remote data repository 130, 230 every 0.10 seconds. When the DARS 100, 200 is in near real-time mode, the onboard data manager 120, 220 queues data in the queuing repository 158, 258 before replicating the data to the remote data manager 132, 232. The onboard data manager 120, 220 also replicates the vehicle event detector information queued in the queueing repository 158, 258 to the remote data manager 132, 232. Near real-time mode is used during normal operation, under most conditions, in order to improve the efficiency of the data replication process.

Real-time mode can be initiated based on events occurring and detected by the vehicle event detector 156, 256 onboard the asset 148, 248 or by a request initiated from the data center 150, 250. A typical data center 150, 250 initiated request for real-time mode is initiated when a remotely located user 152, 252 has requested real-time information from a web client 142, 242. A typical reason for real-time mode to originate onboard the asset 148, 248 is the detection of an event or incident by the vehicle event detector 156, 256 such as an operator initiating an emergency stop request, emergency braking activity, rapid acceleration or deceleration in any axis, or loss of input power to the data recorder 154, 254. When transitioning from near real-time mode to real-time mode, all data not yet replicated to the remote data repository 130, 230 is replicated and stored in the remote data repository 130, 230 and then live replication is initiated. The transition between near real-time mode and real-time mode typically occurs in less than five seconds. After a predetermined amount of time has passed since the event or incident, a predetermined amount of time of inactivity, or when the user 152, 252 no longer desires real-time information from the asset 148, 248, the data recorder 154, 254 reverts to near real-time mode. The predetermined amount of time required to initiate the transition is configurable and is typically set to ten minutes.

When the data recorder 154, 254 is in real-time mode, the onboard data manager 120, 220 attempts to continuously empty its queue to the remote data manager 132, 232, storing the data to the crash hardened memory module 118, 218, and optionally to the non-crash hardened removable storage device 219 of FIG. 2, and sending the data to the remote data manager 132, 232 simultaneously. The onboard data manager 120, 220 also sends the detected vehicle information queued in the queuing repository 158, 258 to the remote data manager 132, 232.

Upon receiving data to be replicated from the data recorder 154, 254, along with data from the map component 164, 264, the route/crew manifest component 124, 224, and the weather component 126, 226, the remote data manager 132, 232 stores the compressed data to the remote data repository 130, 230 in the data center 150, 250 of DARS 100, 200. The remote data repository 130, 230 can be, for example, cloud-based data storage or any other suitable remote data storage. When data is received, a process is initiated that causes a data decoder 136, 236 to decode the recently replicated data for/from the remote data repository 130, 230 and send the decoded data to a remote event detector 134, 234. The remote data manager 132, 232 stores vehicle event information in the remote data repository 130, 230. When the remote event detector 134, 234 receives the decoded data, it processes the decoded data to determine if an event of interest is found in the decoded data. The decoded information is then used by the remote event detector 134, 234 to detect events, incidents, or other predefined situations, in the data occurring with the asset 148, 248. Upon detecting an event of interest from the decoded data, the remote event detector 134, 234 stores the event information and supporting data in the remote data repository 130, 230. When the remote data manager 132, 232 receives remote event detector 134, 234 information, the remote data manager 132, 232 stores the information in the remote data repository 130, 230.

The remotely located user 152, 252 can access information, including vehicle event detector information, relating to the specific asset 148, 248, or a plurality of assets, using the standard web client 142, 242, such as a web browser, or a virtual reality device (not shown) which, in this implementation, can display thumbnail images from selected cameras. The web client 142, 242 communicates the user's 152, 252 request for information to a web server 140, 240 through a network 144, 244 using common web standards, protocols, and techniques. Network 144, 244 can be, for example, the Internet. Network 144, 244 can also be a local area network (LAN), metropolitan area network (MAN), wide area network (WAN), virtual private network (VPN), a cellular telephone network or any other means of transferring data from the web server 140, 240 to, in this example, the web client 142, 242. The web server 140, 240 requests the desired data from the data decoder 136, 236. The data decoder 136, 236 obtains the requested data relating to the specific asset 148, 248, or a plurality of assets, from the remote data repository 130, 230 upon request from the web server 140, 240. The data decoder 136, 236 decodes the requested data and sends the decoded data to a localizer 138, 238. Localization is the process of converting data to formats desired by the end user, such as converting the data to the user's preferred language and units of measure. The localizer 138, 238 identifies the profile settings set by user 152, 252 by accessing the web client 142, 242 and uses the profile settings to prepare the information being sent to the web client 142, 242 for presentation to the user 152, 252, as the raw encoded data and detected event information is saved to the remote data repository 130, 230 using coordinated universal time (UTC) and international system of units (SI units). The localizer 138, 238 converts the decoded data into a format desired by the user 152, 252, such as the user's 152, 252 preferred language and units of measure. The localizer 138, 238 sends the localized data in the user's 152, 252 preferred format to the web server 140, 240 as requested. The web server 140, 240 then sends the localized data of the asset, or plurality of assets, to the web client 142, 242 for viewing and analysis, providing playback and real-time display of standard video and 360 degrees video. The web client 142, 242 can display and the user 152, 252 can view the data, video, and audio for a single asset or simultaneously view the data, video, and audio for a plurality of assets. The web client 142, 242 can also provide synchronous playback and real-time display of data along with the plurality of video and audio data from both standard and 360 degrees video sources on, in, or in the vicinity of the asset, nearby assets, and/or remotely located sites.

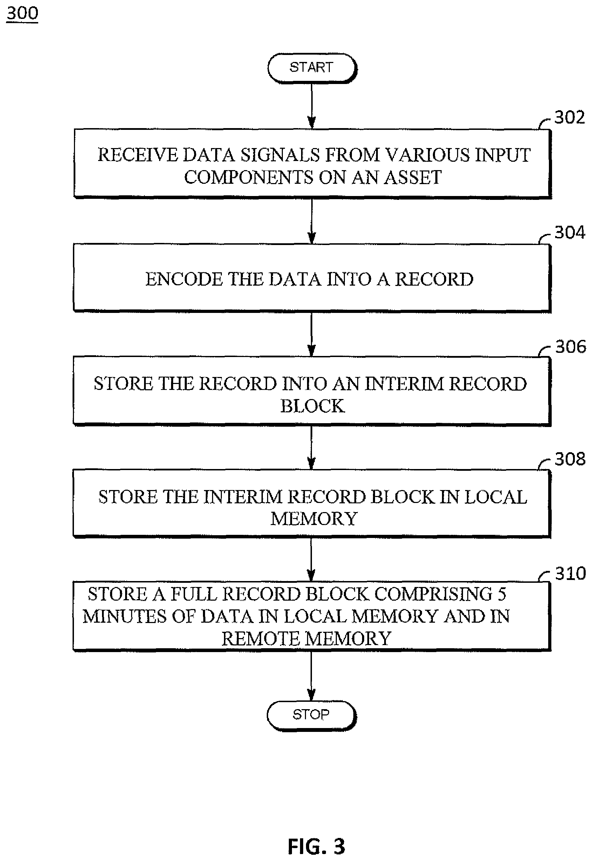

FIG. 3 is a flow diagram showing a process 300 for recording data and/or information from the asset 148, 248 in accordance with an implementation of this disclosure. Data recorder 154, 254 receives data signals from various input components that include physical or calculated data elements from the asset 148, 248 and data center 150, 250, such as speed, latitude coordinates, longitude coordinates, horn detection, throttle position, weather data, map data, or route and/or crew data 302. Data encoder 122, 222 creates a record that includes a structured series of bits used to configure and record the data signal information 304. The encoded record is then sent to the onboard data manager 120, 220 that sequentially combines a series of records in chronological order into record blocks that include up to five minutes of data 306. An interim record block includes less than five minutes of data while a full record block includes a full five minutes of data. Each record block includes all the data required to fully decode the included signals, including a data integrity check. At a minimum, a record block must start with a start record and end with an end record.

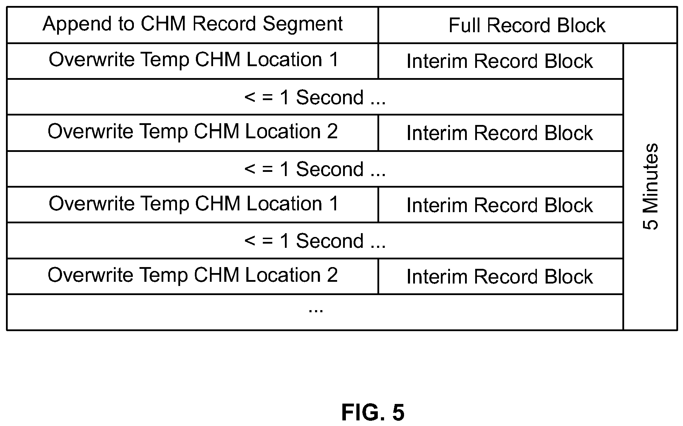

In order to ensure that all of the encoded signal data is saved to the crash hardened memory module 118, and optionally to the non-crash hardened removable storage device 219 of FIG. 2, should the data recorder 154, 254 lose power or be subjected to extreme temperatures or mechanical stresses due to a collision or other catastrophic event, the onboard data manager 120, 220 stores interim record blocks in the crash hardened memory module 118 at a predetermined rate 308, and optionally in the non-crash hardened removable storage device 219 of FIG. 2, where the predetermined rate is configurable and/or variable, as shown in FIG. 5 in an exemplary representation. Interim record blocks are saved at least once per second but can also be saved as frequently as once every tenth of a second. The rate at which interim record blocks are saved depends on the sampling rates of each signal. Every interim record block includes the full set of records since the last full record block. Data recorder 154, 254 can alternate between two temporary storage locations in the crash hardened memory module 118, 218, and optionally in the non-crash hardened removable storage device 219 of FIG. 2, when recording each interim record block to prevent the corruption or loss of more than one second of data when the data recorder 154, 254 loses power while storing data to the crash hardened memory module 118, 218 or the optional non-crash hardened removable storage device 219 of the data recorder 254 of FIG. 2. Each time a new interim record block is saved to a temporary crash hardened memory location it will overwrite the existing previously stored interim record block in that location.

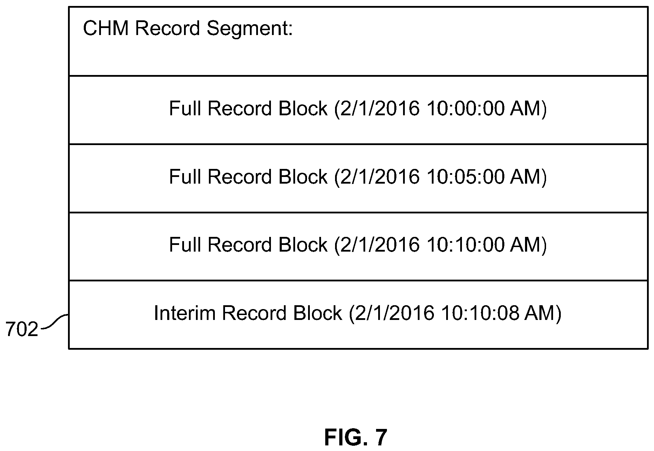

Every five minutes, in this implementation, when the data recorder 154, 254 is in near real-time mode, the onboard data manager 120, 220 stores a full record block including the last five minutes of encoded signal data into a record segment in the crash hardened memory module 118, 218, shown in FIG. 7, and sends a copy of the full record block to the remote data manager 132, 232 to be stored in the remote data repository 130, 230 for a predetermined retention period such as two years 310. The crash hardened memory module 118, 218, and/or the optional non-crash hardened removable storage device 219 of the data recorder 254 of FIG. 2, stores a record segment of the most recent record blocks for a mandated storage duration, which in this implementation is the federally mandated duration that the data recorder 154, 254 must store operational or video data in the crash hardened memory module 118, 218 with an additional 24 hour buffer, and is then overwritten.

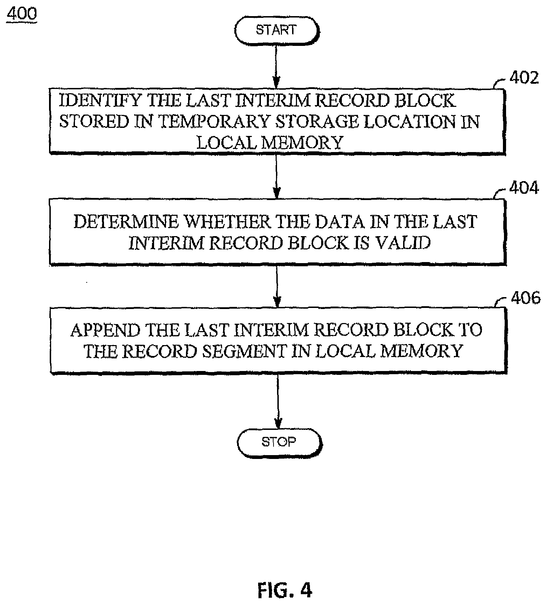

FIG. 4 is a flow diagram showing a process 400 for appending data and/or information from the asset 148, 248 after a power outage in accordance with an implementation of this disclosure. Once power is restored, the data recorder 154, 254 identifies the last interim record block that was stored in one of the two temporary crash hardened memory locations 402 and validates the last interim record block using the 32 bit cyclic redundancy check that is included in the end record of every record block 404. The validated interim record block is then appended to the crash hardened memory record segment and that record segment, which can contain up to five minutes of data prior to the power loss, is sent to the remote data manager 132, 232 to be stored for the retention period 406. The encoded signal data is stored to the crash hardened memory module 118, 218, and/or the optional non-crash hardened removable storage device 219 of the data recorder 254 of FIG. 2, in a circular buffer of the mandated storage duration. Since the crash hardened memory record segment is broken up into multiple record blocks, the data recorder 154, 254 removes older record blocks when necessary to free up memory space each time a full record block is saved to crash hardened memory module 118, 218, and/or the optional non-crash hardened removable storage device 219 of the data recorder 254 of FIG. 2.

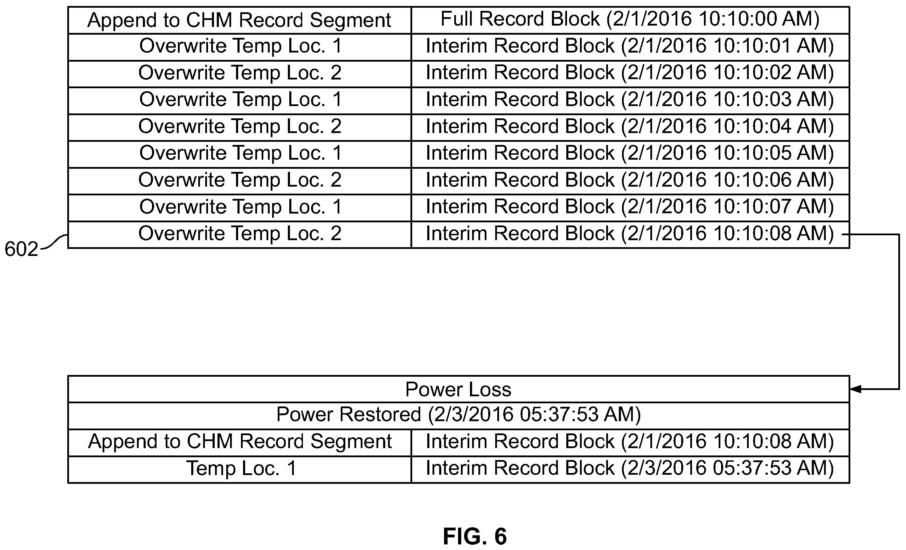

FIG. 6 is a diagram that illustrates exemplary interim record blocks prior to a loss of power and after restoration of power to the data recorder 154, 254. When the interim record block stored in temporary location 2 at (2/1/2016 10:10:08 AM) 602 is valid, that interim record block is appended to the record segment 702 (FIG. 7) in the crash hardened memory module 118, 218, and/or the optional non-crash hardened removable storage device 219 of the data recorder 254 of FIG. 2, as shown in FIG. 7. When the interim record block stored in temporary location 2 at (2/1/2016 10:10:08 AM) is not valid, the interim record block in temporary location 1 at (2/1/2016 10:10:07 AM) is validated and, if valid, is appended to the record segment in the crash hardened memory module 118, 218, and/or the optional non-crash hardened removable storage device 219 of the data recorder 254 of FIG. 2.

Whenever any record block needs to be saved in crash hardened memory module 118, 218, and/or the optional non-crash hardened removable storage device 219 of the data recorder 254 of FIG. 2, the record segment is flushed to the disk immediately. Since the data recorder 154, 254 alternates between two different temporary storage locations when saving interim record blocks, there is always one temporary storage location that is not being modified or flushed to crash hardened memory or non-crash hardened removable storage device, thereby ensuring that at least one of the two interim record blocks stored in the temporary storage locations is valid and that the data recorder 154, 254 will not lose more than one second at most of data whenever the data recorder 154, 254 loses power. Similarly, when the data recorder 154, 254 is writing data to the crash hardened memory module 118, 218, and/or the optional non-crash hardened removable storage device 219 of the data recorder 254 of FIG. 2, every tenth of a second, the data recorder 154, 254 will not lose more than one tenth of a second at most of data whenever the data recorder 154, 254 loses power.

For simplicity of explanation, process 300 and process 400 are depicted and described as a series of steps. However, steps in accordance with this disclosure can occur in various orders and/or concurrently. Additionally, steps in accordance with this disclosure may occur with other steps not presented and described herein. Furthermore, not all illustrated steps may be required to implement a method in accordance with the disclosed subject matter.

A third embodiment of a real-time data acquisition and recording system and viewer described herein provides real-time, or near real-time, access to a wide range of data, such as event and operational data, video data, and audio data, of a high value asset to remotely located users such as asset owners, operators and investigators. The data acquisition and recording system records data, via a data recorder, relating to the asset and streams the data to a remote data repository and remotely located users prior to, during, and after an incident has occurred. The data is streamed to the remote data repository in real-time, or near real-time, making information available at least up to the time of an incident or emergency situation, thereby virtually eliminating the need to locate and download the "black box" in order to investigate an incident involving the asset and eliminating the need to interact with the data recorder on the asset to request a download of specific data, to locate and transfer files, and to use a custom application to view the data. The system of the present disclosure retains typical recording capabilities and adds the ability to stream data to a remote data repository and remote end user prior to, during, and after an incident. In the vast majority of situations, the information recorded in the data recorder is redundant and not required as data has already been acquired and stored in the remote data repository.

Prior to the system of the present disclosure, data was extracted from the "black box" or "event recorder" after an incident had occurred and an investigation was required. Data files containing time segments recorded by the "black box" had to be downloaded and retrieved from the "black box" and then viewed by a user with proprietary software. The user would have to obtain physical or remote access to the asset, select the desired data to be downloaded from the "black box," download the file containing the desired information to a computing device, and locate the appropriate file with the desired data using a custom application that operates on the computing device. The system of the present disclosure has eliminated the need for the user to perform these steps, only requiring the user to use a common web browser to navigate to the desired data. The remotely located user may access a common web browser to navigate to desired data relating to a selected asset to view and analyze the operational efficiency and safety of assets in real-time or near real-time.

The remotely located user, such as an asset owner, operator, and/or investigator, may access a common web browser to navigate to live and/or historic desired data relating to a selected asset to view and analyze the operational efficiency and safety of assets in real-time or near real-time. The ability to view operations in real-time, or near real-time, enables rapid evaluation and adjustment of behavior. During an incident, for example, real-time information and/or data can facilitate triaging the situation and provide valuable information to first responders. During normal operation, for example, near real-time information and/or data can be used to audit crew performance and to aid network wide situational awareness.

The real-time data acquisition and recording system of the third embodiment uses at least one of, or any combination of, an image measuring device, a video measuring device, and a range measuring device in, on, or in the vicinity of a mobile asset as part of a data acquisition and recording system. Image measuring devices and/or video measuring devices include, but are not limited to, 360 degrees cameras, fixed cameras, narrow view cameras, wide view cameras, 360 degrees fisheye view cameras, and/or other cameras. Range measuring devices include, but are not limited to, radar and light detection and ranging ("LIDAR"). LIDAR is a surveying method that measures distance to a target by illuminating the target with pulsed laser light and measuring the reflected pulses with a sensor. Prior to the system of the present disclosure, "black box" and/or "event recorders" did not include 360 degrees cameras or other cameras in, on, or in the vicinity of the mobile asset. The system of the present disclosure adds the ability to use and record videos using 360 degrees cameras, fixed cameras, narrow view cameras, wide view cameras, 360 degrees fisheye view cameras, radar, LIDAR, and/or other cameras as part of the data acquisition and recording system, providing 360 degrees views, narrow views, wide views, fisheye views, and/or other views in, on, or in the vicinity of the mobile asset to a remote data repository and a remote user and investigators prior to, during, and after an incident involving the mobile asset has occurred. The ability to view operations, 360 degrees video, and/or other videos in real-time, or near real-time, enables rapid evaluation and adjustment of crew behavior. Owners, operators, and investigators can view and analyze the operational efficiency, safety of people, vehicles, and infrastructures and can investigate or inspect an incident. The ability to view 360 degrees video and/or other videos from the mobile asset enables rapid evaluation and adjustment of crew behavior. During an incident, for example, 360 degrees video and/or other videos can facilitate triaging the situation and provide valuable information to first responders and investigators. During normal operation, for example, 360 degrees video and/or other videos can be used to audit crew performance and to aid network wide situational awareness. The 360 degrees cameras, fixed cameras, narrow view cameras, wide view cameras, 360 degrees fisheye view cameras, radar, LIDAR and/or other cameras provide a complete picture for situations to provide surveillance video for law enforcement and/or rail police, inspection of critical infrastructure, monitoring of railroad crossings, view track work progress, crew auditing both inside the cab and in the yard, and real-time remote surveillance.

Prior systems required users to download video files containing time segments in order to view the video files using a proprietary software application or other external video playback applications. The data acquisition and recording system of the present disclosure provides 360 degrees video, other video, image information and audio information, and range measuring information that can be displayed to a remote user through the use of a virtual reality device and/or through a standard web client, thereby eliminating the need to download and use external applications to watch the videos. Additionally, remotely located users can view 360 degrees videos and/or other videos in various modes through the use of a virtual reality device or through a standard web client, such as a web browser, thereby eliminating the need to download and use external applications to watch the video. Prior video systems required the user to download video files containing time segments of data that were only viewable using proprietary application software or other external video playback applications which the user had to purchase separately.

Data may include, but is not limited to, video and image information from cameras located at various locations in, on or in the vicinity of the asset and audio information from microphones located at various locations in, on or in vicinity of the asset. A 360 degrees camera is a camera that provides a 360 degrees spherical field of view, a 360 degrees hemispherical field of view, and/or 360 degrees fish eye field of view. Using 360 degrees cameras, fixed cameras, narrow view cameras, wide view cameras, 360 degrees fisheye view cameras, and/or other cameras in, on or in the vicinity of an asset provides the ability to use and record video using the 360 degrees cameras, fixed cameras, narrow view cameras, wide view cameras, 360 degrees fisheye view cameras, and/or other cameras as part of DARS, thereby making the 360 degrees view and/or other views in, on or in the vicinity of the asset available to a remote data repository, remotely located users, and investigators prior to, during and after an incident.

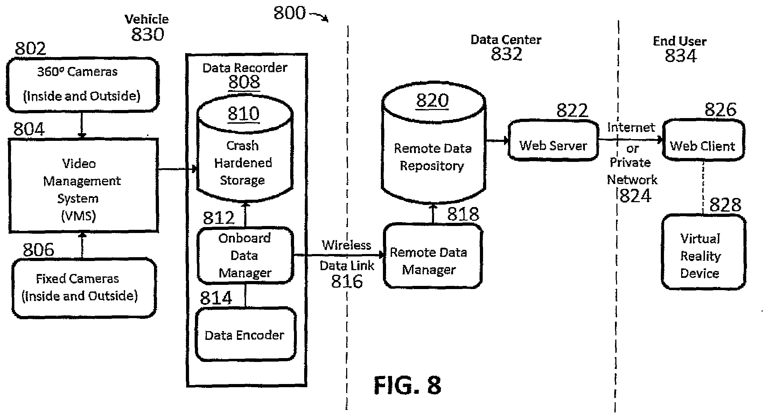

FIG. 8 illustrates a field implementation of a third embodiment of an exemplary real-time data acquisition and recording system (DARS) 800 in which aspects of the disclosure can be implemented. DARS 800 is a system that delivers real time information, video information, and audio information from a data recorder 808 on a mobile asset 830 to remotely located end users via a data center 832. The data recorder 808 is installed on the vehicle or mobile asset 830 and communicates with any number of various information sources through any combination of wired and/or wireless data links such as a wireless gateway/router (not shown). The data recorder 808 comprises a crash hardened memory module 810, an onboard data manager 812, and a data encoder 814. In a fourth embodiment, the data recorder 808 can also include a non-crash hardened removable storage device (not shown). An exemplary hardened memory module 810 can be, for example, a crashworthy event recorder memory module that complies with the Code of Federal Regulations and the Federal Railroad Administration regulations, a crash survivable memory unit that complies with the Code of Federal Regulations and the Federal Aviation Administration regulations, a crash hardened memory module in compliance with any applicable Code of Federal Regulations, or any other suitable hardened memory device as is known in the art. The wired and/or wireless data links can include any one of or combination of discrete signal inputs, standard or proprietary Ethernet, serial connections, and wireless connections.

Data recorder 808 gathers video data, audio data, and other data and/or information from a wide variety of sources, which can vary based on the asset's configuration, through onboard data links. In this implementation, data recorder 808 receives data from a video management system 804 that continuously records video data and audio data from 360 degrees cameras, fixed cameras, narrow view cameras, wide view cameras, 360 degrees fisheye view cameras, radar, LIDAR, and/or other cameras 802 and fixed cameras 806 that are placed in, on or in the vicinity of the asset 830 and the video management system 804 stores the video and audio data to the crash hardened memory module 810, and can also store the video and audio data in the non-crash hardened removable storage device of the second embodiment. Different versions of the video data are created using different bitrates or spatial resolutions and these versions are separated into segments of variable length, such as thumbnails, five minute low resolution segments, and five minute high resolution segments.

The data encoder 814 encodes at least a minimum set of data that is typically defined by a regulatory agency. The data encoder 814 receives video and audio data from the video management system 804 and compresses or encodes the data and time synchronizes the data in order to facilitate efficient real-time transmission and replication to a remote data repository 820. The data encoder 814 transmits the encoded data to the onboard data manager 812 which then sends the encoded video and audio data to the remote data repository 820 via a remote data manager 818 located in the data center 830 in response to an on-demand request by a remotely located user 834 or in response to certain operating conditions being observed onboard the asset 830. The onboard data manager 812 and the remote data manager 818 work in unison to manage the data replication process. The remote data manager 818 in the data center 832 can manage the replication of data from a plurality of assets. The video and audio data stored in the remote data repository 820 is available to a web server 822 for the remote located user 834 to access.

The onboard data manager 812 also sends data to a queueing repository (not shown). The onboard data manager 812 monitors the video and audio data stored in the crash hardened memory module 810, and/or the optional non-crash hardened removable storage device of the fourth embodiment, by the video management system 804 and determines whether it is in near real-time mode or real-time mode. In near real-time mode, the onboard data manager 812 stores the encoded data, including video data, audio data, and any other data or information, received from the data encoder 814 and any event information in the crash hardened memory module 810, and/or the optional non-crash hardened removable storage device of the fourth embodiment, and in the queueing repository. After five minutes of encoded data has accumulated in the queueing repository, the onboard data manager 812 stores the five minutes of encoded data to the remote data repository 820 via the remote data manager 818 in the data center 832 through a wireless data link 816. In real-time mode, the onboard data manager 812 stores the encoded data, including video data, audio data, and any other data or information, received from the data encoder 814 and any event information to the remote data repository 820 via the remote data manager 818 in the data center 832 through the wireless data link 816 at a configurable rate, such as every second or every 0.10 seconds. The onboard data manager 812 and the remote data manager 818 can communicate over a variety of wireless communications links. Wireless data link 816 can be, for example, a wireless local area network (WLAN), wireless metropolitan area network (WMAN), wireless wide area network (WWAN), a private wireless system, a cellular telephone network or any other means of transferring data from the data recorder 808 to, in this example, the remote data manager 818. The process of sending and retrieving video data and audio data remotely from the asset 830 requires a wireless data connection between the asset 830 and the data center 832. When a wireless data connection is not available, the data is stored and queued in the crash hardened memory module 810, and/or the optional non-crash hardened removable storage device of the fourth embodiment, until wireless connectivity is restored. The video, audio, and any other additional data retrieval process resumes as soon as wireless connectivity is restored.

In parallel with data recording, the data recorder 808 continuously and autonomously replicates data to the remote data repository 820. The replication process has two modes, a real-time mode and a near real-time mode. In real-time mode, the data is replicated to the remote data repository 820 every second. In near real-time mode, the data is replicated to the remote data repository 820 every five minutes. The rate used for near real-time mode is configurable and the rate used for real-time mode can be adjusted to support high resolution data by replicating data to the remote data repository 820 every 0.10 seconds. Near real-time mode is used during normal operation, under most conditions, in order to improve the efficiency of the data replication process.

Real-time mode can be initiated based on events occurring onboard the asset 830 or by a request initiated from the data center 832. A typical data center 832 initiated request for real-time mode is initiated when the remotely located user 834 has requested real-time information from a web client 826. A typical reason for real-time mode to originate onboard the asset 830 is the detection of an event or incident such as an operator initiating an emergency stop request, emergency braking activity, rapid acceleration or deceleration in any axis, or loss of input power to the data recorder 808. When transitioning from near real-time mode to real-time mode, all data not yet replicated to the remote data repository 820 is replicated and stored in the remote data repository 820 and then live replication is initiated. The transition between near real-time mode and real-time mode typically occurs in less than five seconds. After a predetermined amount of time has passed since the event or incident, a predetermined amount of time of inactivity, or when the user 834 no longer desires real-time information from the asset 830, the data recorder 808 reverts to near real-time mode. The predetermined amount of time required to initiate the transition is configurable and is typically set to ten minutes.

When the data recorder 808 is in real-time mode, the onboard data manager 812 attempts to continuously empty its queue to the remote data manager 818, storing the data to the crash hardened memory module 810, and the optional non-crash hardened removable storage device of the second embodiment, and sending the data to the remote data manager 818 simultaneously.

Upon receiving video data, audio data, and any other data or information to be replicated from the data recorder 808, the remote data manager 818 stores the data to the remote data repository 820 in the data center 830. The remote data repository 820 can be, for example, cloud-based data storage or any other suitable remote data storage. When data is received, a process is initiated that causes a data decoder (not shown) to decode the recently replicated data from the remote data repository 820 and send the decoded data to a remote event detector (not shown). The remote data manager 818 stores vehicle event information in the remote data repository 820. When the remote event detector receives the decoded data, it processes the decoded data to determine if an event of interest is found in the decoded data. The decoded information is then used by the remote event detector to detect events, incidents, or other predefined situations, in the data occurring with the asset 830. Upon detecting an event of interest from the decoded data previously stored in the remote data repository 820, the remote event detector stores the event information and supporting data in the remote data repository 820.

Video data, audio data, and any other data or information is available to the user 834 in response to an on-demand request by the user 834 and/or is sent by the onboard data manager 812 to the remote data repository 820 in response to certain operating conditions being observed onboard the asset 830. Video data, audio data, and any other data or information stored in the remote data repository 820 is available on the web server 822 for the user 834 to access. The remotely located user 834 can access the video data, audio data, and any other data or information relating to the specific asset 830, or a plurality of assets, stored in the remote data repository 820 using the standard web client 826, such as a web browser, or a virtual reality device 828 which, in this implementation, can display thumbnail images of selected cameras. The web client 826 communicates the user's 834 request for video, audio, and/or other information to the web server 822 through a network 824 using common web standards, protocols, and techniques. Network 824 can be, for example, the Internet. Network 824 can also be a local area network (LAN), metropolitan area network (MAN), wide area network (WAN), virtual private network (VPN), a cellular telephone network or any other means of transferring data from the web server 822 to, in this example, the web client 826. The web server 822 requests the desired data from the remote data repository 820. The web server 822 then sends the requested data to the web client 826 that provides playback and real-time display of standard video, 360 degrees video, and/or other video. The web client 826 plays the video data, audio data, and any other data or information for the user 834 who can interact with the 360 degrees video data and/or other video data and/or still image data for viewing and analysis. The user 834 can also download the video data, audio data, and any other data or information using the web client 826 and can then use the virtual reality device 828 to interact with the 360 degrees video data for viewing and analysis.

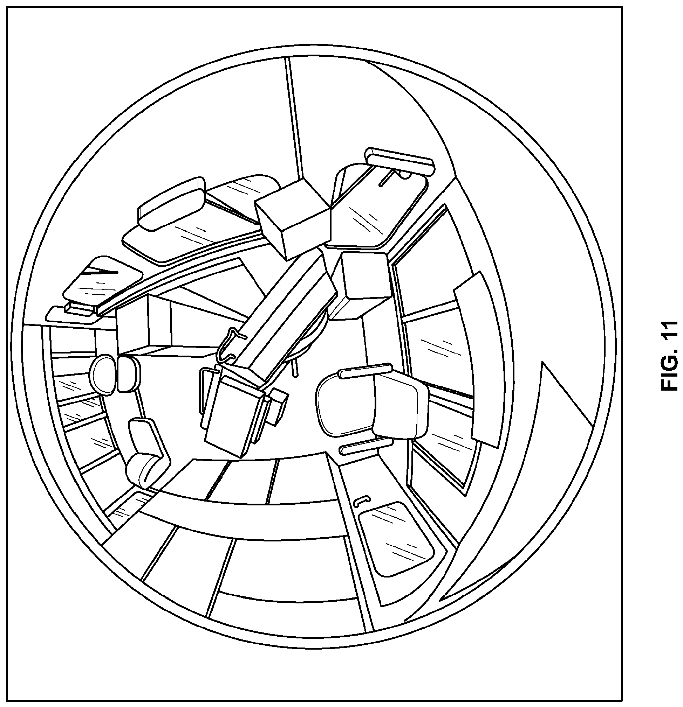

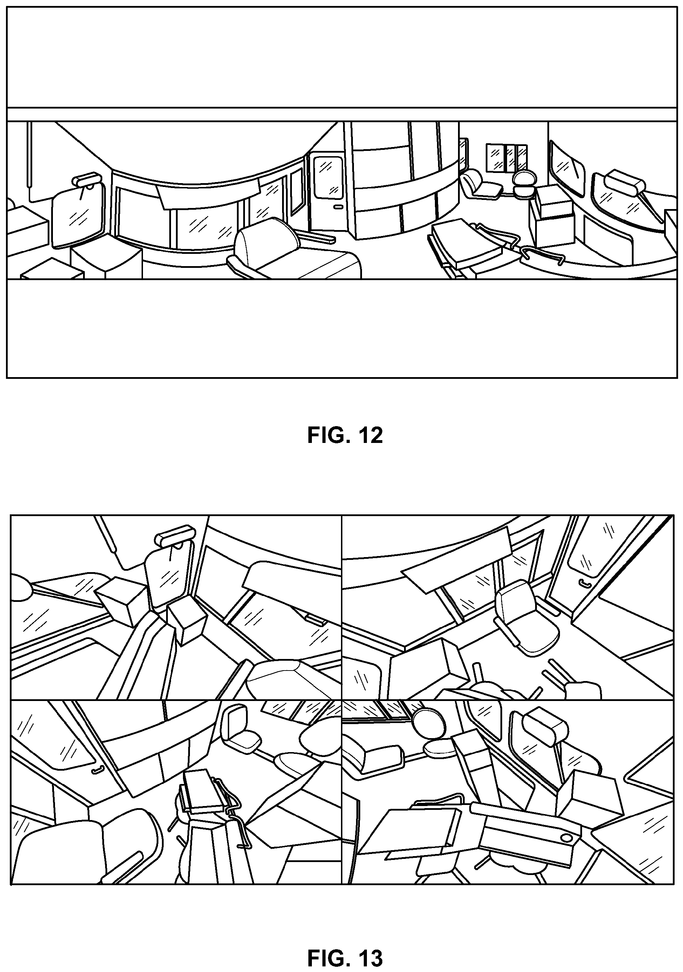

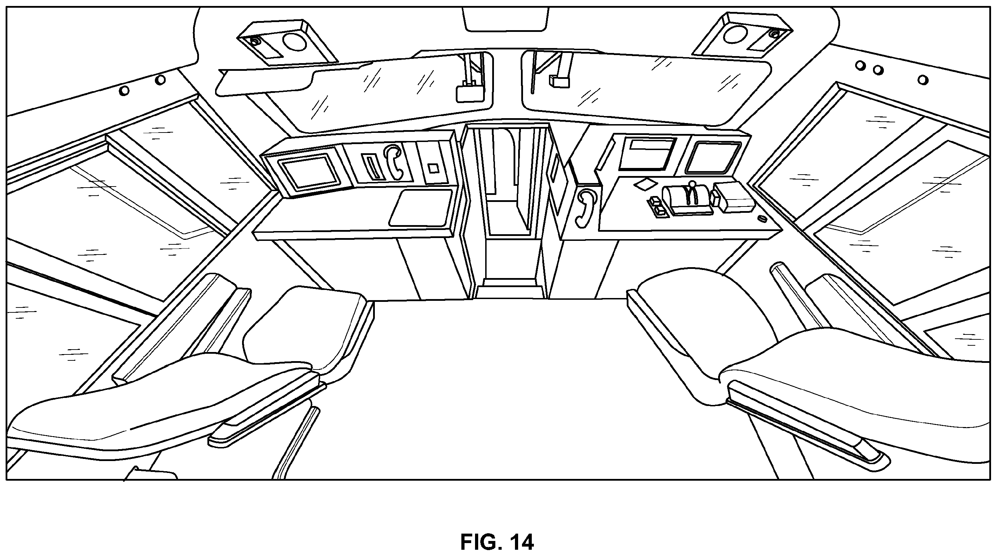

The web client 826 can be enhanced with a software application that provides the playback of 360 degrees video and/or other video in a variety of different modes. The user 834 can elect the mode in which the software application presents the video playback such as, for example, fisheye view as shown in FIG. 11, panorama view as shown in FIG. 12, double panorama view (not shown), quad view as shown in FIG. 13, and dewarped view as shown in FIG. 14.

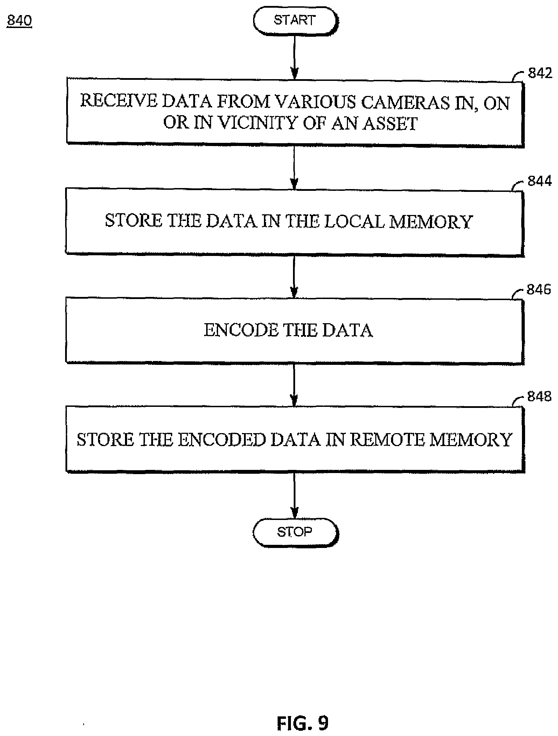

FIG. 9 is a flow diagram showing a process 840 for recording video data, audio data, and/or information from the asset 830 in accordance with an implementation of this disclosure. Video management system 804 receives data signals from various input components 842, such as the 360 degrees cameras, fixed cameras, narrow view cameras, wide view cameras, 360 degrees fisheye view cameras, radar, LIDAR and/or other cameras 802 and the fixed cameras 806 on, in or in the vicinity of the asset 830. The video management system 804 then stores the video data, audio data, and/or information in the crash hardened memory module 810, and/or the optional non-crash hardened removable storage device of the fourth embodiment, 844 using any combination of industry standard formats, such as, for example, still images, thumbnails, still image sequences, or compressed video formats. Data encoder 814 creates a record that includes a structured series of bits used to configure and record the data signal information 846. In near real-time mode, the video management system 804 stores video data into the crash hardened memory module 810, and/or the optional non-crash hardened removable storage device of the fourth embodiment, while only sending limited video data, such as thumbnails or very short low resolution video segments, off board to the remote data repository 820 848.

In another implementation, the encoded record is then sent to the onboard data manager 812 that sequentially combines a series of records in chronological order into record blocks that include up to five minutes of data. An interim record block includes less than five minutes of data while a full record block includes a full five minutes of data. Each record block includes all the data required to fully decode the included signals, including a data integrity check. At a minimum, a record block must start with a start record and end with an end record.

In order to ensure that all of the encoded signal data is saved to the crash hardened memory module 810, and/or the optional non-crash hardened removable storage device of the fourth embodiment, should the data recorder 808 lose power, the onboard data manager 812 stores interim record blocks in the crash hardened memory module 810, and/or the optional non-crash hardened removable storage device of the fourth embodiment, at a predetermined rate, where the predetermined rate is configurable and/or variable. Interim record blocks are saved at least once per second but can also be saved as frequently as once every tenth of a second. The rate at which interim record blocks are saved depends on the sampling rates of each signal. Every interim record block includes the full set of records since the last full record block. The data recorder 808 can alternate between two temporary storage locations in the crash hardened memory module 810 when recording each interim record block to prevent the corruption or loss of more than one second of data when the data recorder 808 loses power while storing data to the crash hardened memory module 810. Each time a new interim record block is saved to a temporary crash hardened memory location it will overwrite the existing previously stored interim record block in that location.

Every five minutes, in this implementation, when the data recorder 808 is in near real-time mode, the onboard data manager 812 stores a full record block including the last five minutes of encoded signal data into a record segment in the crash hardened memory module 810, and/or the optional non-crash hardened removable storage device of the fourth embodiment, and sends a copy of the full record block, comprising five minutes of video data, audio data, and/or information, to the remote data manager 818 to be stored in the remote data repository 820 for a predetermined retention period such as two years. The crash hardened memory module 810, and/or the optional non-crash hardened removable storage device of the fourth embodiment, stores a record segment of the most recent record blocks for a mandated storage duration, which in this implementation is the federally mandated duration that the data recorder 808 must store operational or video data in the crash hardened memory module 810 with an additional 24 hour buffer, and is then overwritten.

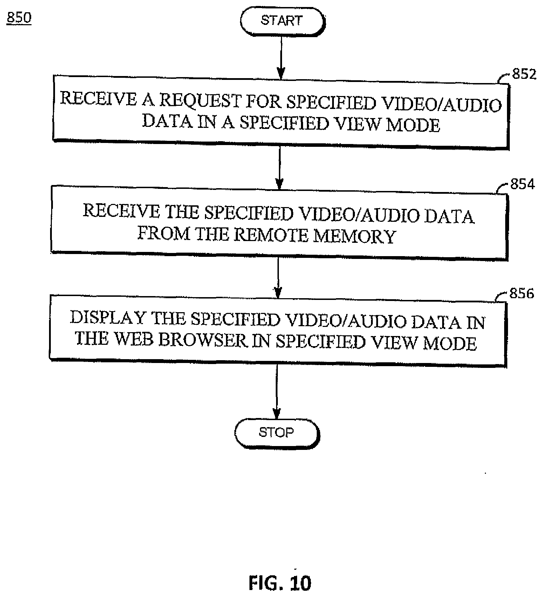

FIG. 10 is a flow diagram showing a process 850 for viewing data and/or information from the asset 830 through a web browser 826 or virtual reality device 828. When an event occurs or when the remotely located authorized user 834 requests a segment of video data stored in the crash hardened memory module 810 via the web client 826, the onboard data manager 812, depending on the event, will begin sending video data off board in real-time at the best resolution available given the bandwidth of the wireless data link 816. The remotely located user 834 initiates a request for specific video and/or audio data in a specific view mode 852 through the web client 826 which communicates the request to the web server 822 through network 824. The web server 822 requests the specific video and/or audio data from the remote data repository 820 and sends the requested video and/or audio data to the web client 826 854 through the network 824. The web client 826 displays the video and/or audio data in the view mode specified by the user 834 856. The user 834 can then download the specific video and/or audio data to view on the virtual reality device 828. In another implementation, in real-time mode thumbnails are sent first at one second intervals, then short segments of lower resolution videos, and then short segments of higher resolution videos.

For simplicity of explanation, process 840 and process 850 are depicted and described as a series of steps. However, steps in accordance with this disclosure can occur in various orders and/or concurrently. Additionally, steps in accordance with this disclosure may occur with other steps not presented and described herein. Furthermore, not all illustrated steps may be required to implement a method in accordance with the disclosed subject matter.

A fifth embodiment of a real-time data acquisition and recording system and video analytics system described herein provides real-time, or near real-time, access to a wide range of data, such as event and operational data, video data, and audio data, of a high value asset to remotely located users. The data acquisition and recording system records data relating to the asset and streams the data to a remote data repository and remotely located users prior to, during, and after an incident has occurred. The data is streamed to the remote data repository in real-time, or near real-time, making information available at least up to the time of an incident or emergency situation, thereby virtually eliminating the need to locate and download the "black box" in order to investigate an incident involving the asset by streaming information to the remote data repository in real-time and making information available at least up to the time of a catastrophic event. DARS performs video analysis of video data recorded of the mobile asset to determine, for example, cab occupancy, track detection, and detection of objects near tracks. The remotely located user may use a common web browser to navigate to and view desired data relating to a selected asset and is not required to interact with the data acquisition and recording system on the asset to request a download of specific data, to locate or transfer files, and to use a custom application to view the data.

DARS provides remotely located users access to video data and video analysis performed by a video analytics system by streaming the data to the remote data repository and to the remotely located user prior to, during, and after an incident, thereby eliminating the need for a user to manually download, extract, and playback video to review the video data to determine cab occupancy, whether a crew member or unauthorized personal was present during an incident, track detection, detection of objects near tracks, investigation or at any other time of interest. Additionally, the video analytics system provides cab occupancy status determination, track detection, detection of objects near tracks, lead and trail unit determination by processing image and video data in real-time, thereby ensuring that the correct data is always available to the user. For example, the real-time image processing ensures that a locomotive designated as the trail locomotive is not in lead service to enhance railroad safety. Prior systems provided a locomotive position within the train by using the train make-up functionality in dispatch systems. At times, the dispatch system information can be obsolete as the information is not updated in real-time and crew personnel can change the locomotive if deemed necessary.

Prior to the system of the present disclosure, inspection crews and/or asset personnel had to manually inspect track conditions, manually check if the vehicle is in the lead or trail position, manually survey the locations of each individual object of interest, manually create a database of geographic locations of all objects of interest, periodically performs manual field surveys of each object of interest to verify their location and identify any changes in geographic location that differs from the original survey, manually update the database when objects of interest change location due to repair or additional infrastructure development since the time when the original database was created, select and download desired data from a digital video recorder and/or data recorder and inspect the downloaded data and/or video offline and check tracks for any obstructions, and the vehicle operator had to physically check for any obstructions and/or switch changes. The system of the present disclosure has eliminated the need for users to perform these steps, only requiring the user to use a common web browser to navigate to the desired data. Asset owners and operators can automate and improve the efficiency and safety of mobile assets in real-time and can actively monitor the track conditions and can get warning information in real-time. The system of the present disclosure eliminates the need for asset owners and operators to download data from the data recorder in order to monitor track conditions and investigate incidents. As an active safety system, DARS can aid the operator to check for any obstructions, send alerts in real-time and/or save the information offline, and send alert information for remote monitoring and storage. Both current and past track detection information and/or information relating to detection of objects near tracks can be stored in the remote data repository in real-time to aid the user in viewing the information when required. The remotely located user may access a common web browser to navigate to desired data relating to a selected asset to view and analyze the operational efficiency and safety of assets in real-time or near real-time.

The real-time data acquisition and recording system of the fifth embodiment can be used to continuously monitor objects of interest and identify in real-time when they have been moved or damaged, become obstructed by foliage, and/or are in disrepair and in need of maintenance. DARS utilizes video, image, and/or audio information to detect and identify various infrastructure objects, such as rail tracks, in the videos, has the ability to follow the tracks as the mobile asset progresses, and has the ability to create, audit against and periodically update a database of objects of interest with the geographical location. The real-time data acquisition and recording system of the fifth embodiment uses at least one of, or any combination of, an image measuring device, a video measuring device, and a range measuring device in, on, or in the vicinity of a mobile asset as part of a data acquisition and recording system. Image measuring devices and/or video measuring devices include, but are not limited to, 360 degrees cameras, fixed cameras, narrow view cameras, wide view cameras, 360 degrees fisheye view cameras, and/or other cameras. Range measuring devices include, but are not limited to, radar and light detection and ranging ("LIDAR"). LIDAR is a surveying method that measures distance to a target by illuminating the target with pulsed laser light and measuring the reflected pulses with a sensor.

DARS can automatically inspect track conditions, such as counting the number of tracks present, identifying the current track the mobile asset is traveling on, and detecting any obstructions or defects present, such as ballast washed out, broken tracks, tracks out of gauge, misaligned switches, switch run-overs, flooding in the tracks, snow accumulations, etc., and plan for any preventive maintenance so as to avoid any catastrophic events. DARS can also detect rail track switches and follow track changes. DARS can further detect the change in the location of data including whether an object is missing, obstructed and/or not present at the expected location. Track detection, infrastructure diagnosing information, and/or infrastructure monitoring information can be displayed to a user through the use of any standard web client, such as a web browser, thereby eliminating the need to download files from the data recorder and use proprietary application software or other external applications to view the information as prior systems required. This process can be extended to automatically create, audit, and/or update a database with geographic locations of objects of interest and to ensure compliance with Federal Regulations. With the system of the present disclosure, cameras previously installed to comply with Federal Regulations are utilized to perform various tasks that previously required human interaction, specialized vehicles, and/or alternate equipment. DARS allows these tasks to be performed automatically as the mobile asset travels throughout the territory as part of normal revenue service and daily operation. DARS can be used to save countless person-hours of manual work by utilizing normal operations of vehicles and previously installed cameras to accomplish tasks which previously required manual effort. DARS can also perform tasks which previously have been performed using specialized vehicles, preventing closure of segments of track to inspect and locate track and objects of interest which often resulted in loss of revenue service and expensive equipment to purchase and maintain. DARS further reduces the amount of time humans are required to be located within the near vicinity of rail tracks, resulting in less overall accidents and potential loss of life.

Data may include, but is not limited to, measured analog and frequency parameters such as speed, pressure, temperature, current, voltage and acceleration that originates from the mobile assets and/or nearby mobile assets; measured Boolean data such as switch positions, actuator positions, warning light illumination, and actuator commands; position, speed and altitude information from a global positioning system (GPS) and additional data from a geographic information system (GIS) such as the latitude and longitude of various objects of interest; internally generated information such as the regulatory speed limit for the mobile asset given its current position; train control status and operational data generated by systems such as positive train control (PTC); vehicle and inertial parameters such as speed, acceleration, and location such as those received from the GPS; GIS data such as the latitude and longitude of various objects of interest; video and image information from at least one camera located at various locations in, on, or in the vicinity of the mobile asset; audio information from at least one microphone located at various locations in, on, or in the vicinity of the mobile asset; information about the operational plan for the mobile asset that is sent to the mobile asset from a data center such as route, schedule, and cargo manifest information; information about the environmental conditions, such as current and forecasted weather, of the area in which the mobile asset is currently operating in or is planned to operate in; and data derived from a combination of any of the above sources including additional data, video, and audio analysis and analytics.

"Track" may include, but is not limited to, the rails and ties of the railroads used for locomotive and/or train transportation. "Objects of interest" may include, but are not limited to, various objects of infrastructure installed and maintained within the nearby vicinity of railroad tracks which may be identified with the use of artificial intelligence, such as supervised learning or reinforcement learning, of asset camera images and video. Supervised learning and/or reinforcement learning utilizes previously labeled data sets defined as "training" data to allow remote and autonomous identification of objects within view of the camera in, on, or in the vicinity of the mobile asset. Supervised learning and/or reinforcement learning trains the neural network models to identify patterns occurring within the visual imagery obtained from the cameras. These patterns, such as people, crossing gates, cars, trees, signals, switches, etc., can be found in single images alone. Successive frames within a video can also be analyzed for patterns such as blinking signals, moving cars, people falling asleep, etc. DARS may or may not require human interaction at any stage of implementation including, but not limited to, labeling training data sets required for supervised learning and/or reinforcement learning. Objects of interest include, but is not limited to, tracks, track centerline points, milepost signs, signals, crossing gates, switches, crossings, and text based signs. "Video analytics" refers to any intelligible information gathered by analyzing videos and/or images recorded from the image, video, and/or range measuring devices, such as at least one camera, such as 360 degrees cameras, fixed cameras, narrow view cameras, wide view cameras, 360 degrees fisheye view cameras, radar, LIDAR, and/or other cameras, in, on, or in the vicinity of the mobile asset, such as, but not limited to, objects of interest, geographic locations of objects, track obstructions, distances between objects of interest and the mobile asset, track misalignment, etc. The video analytics system can also be used in any mobile asset, dwelling area, space, or room containing a surveillance camera to enhance video surveillance. In mobile assets, the video analytics system provides autonomous cab occupied event detection to remotely located users economically and efficiently.

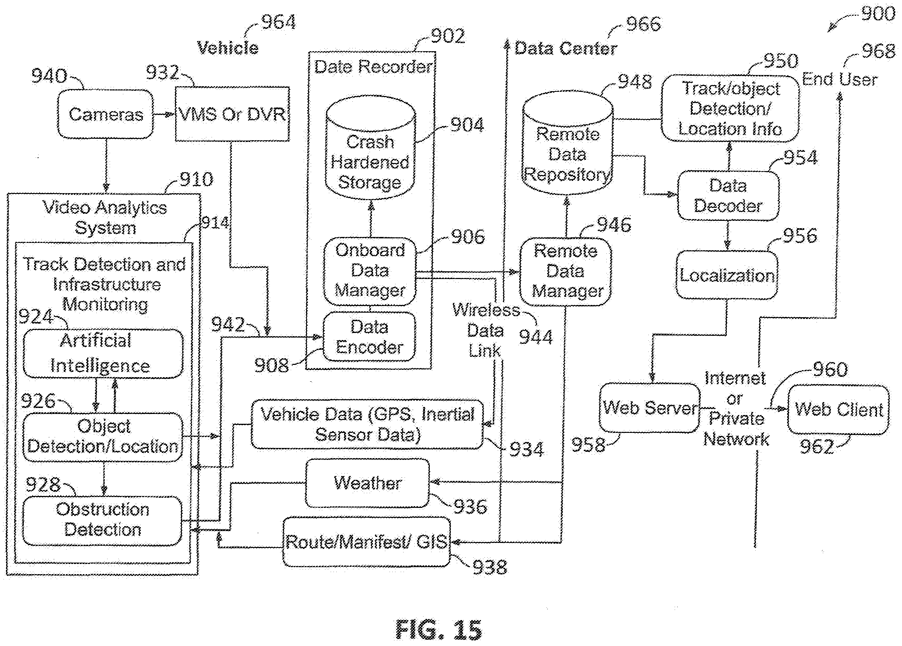

FIG. 15 illustrates a field implementation of a fifth embodiment of an exemplary real-time data acquisition and recording system (DARS) 900 in which aspects of the disclosure can be implemented. DARS 900 is a system that delivers real time information, video information, and audio information from a data recorder 902 on a mobile asset 964 to remotely located end users 968 via a data center 966. The data recorder 902 is installed on the vehicle or mobile asset 964 and communicates with any number of various information sources through any combination of wired and/or wireless data links 942, such as a wireless gateway/router (not shown). Data recorder 902 gathers video data, audio data, and other data or information from a wide variety of sources, which can vary based on the asset's configuration, through onboard data links 942. The data recorder 902 comprises a local memory component, such as a crash hardened memory module 904, an onboard data manager 906, and a data encoder 908 in the asset 964. In a sixth embodiment, the data recorder 902 can also include a non-crash hardened removable storage device (not shown). An exemplary hardened memory module 904 can be, for example, a crashworthy event recorder memory module that complies with the Code of Federal Regulations and the Federal Railroad Administration regulations, a crash survivable memory unit that complies with the Code of Federal Regulations and the Federal Aviation Association regulations, a crash hardened memory module in compliance with any applicable Code of Federal Regulations, or any other suitable hardened memory device as is known in the art. The wired and/or wireless data links can include any one of or combination of discrete signal inputs, standard or proprietary Ethernet, serial connections, and wireless connections.

DARS 900 further comprises a video analytics system 910 that includes a track and/or object detection and infrastructure monitoring component 914. The track detection and infrastructure monitoring component 914 comprises a supervised learning and/or reinforcement learning component 924, or other neural network or artificial intelligence component, an object detection and location component 926, and an obstruction detection component 928 that detects obstructions present on or near the tracks and/or camera obstructions such as personnel blocking the cameras view. In this implementation, live video data is captured by at least one camera 940 mounted in the cab of the asset 964, on the asset 964, or in the vicinity of the asset 964. The cameras 940 are placed at an appropriate height and angle to capture video data in and around the asset 964 and obtain a sufficient amount of the view for further processing. The live video data and image data is captured in front of and/or around the asset 964 by the cameras 940 and is fed to the track and/or object detection and infrastructure monitoring component 914 for analysis. The track detection and infrastructure monitoring component 914 of the video analytics system 910 processes the live video and image data frame by frame to detect the presence of the rail tracks and any objects of interest. Camera position parameters such as height, angle, shift, focal length, and field of view can either be fed to the track and/or object detection and infrastructure monitoring component 914 or the cameras 940 can be configured to allow the video analytics system 910 to detect and determine the camera position and parameters.

To make a status determination, such as cab occupancy detection, the video analytics system 910 uses the supervised learning and/or reinforcement learning component 924, and/or other artificial intelligence and learning algorithms, to evaluate, for example, video data from cameras 940, asset data 934 such as speed, GPS data, and inertial sensor data, weather component 936 data, and route/crew manifest, and GIS component data 938. Cab occupancy detection is inherently susceptible to environmental noise sources such as light reflecting off clouds and sunlight passing through buildings and trees while the asset is moving. To handle environmental noise, the supervised learning and/or reinforcement learning component 924, the object detection and location component 926, the obstruction detection component 928, asset component 934 data that can include speed, GPS data, and inertial sensor data, weather component 936 data, and other learning algorithms are composed together to form internal and/or external status determination involving the mobile asset 964. The track and/or object detection and infrastructure monitoring component 914 can also include a facial recognition system adapted to allow authorizing access to locomotive as part of locomotive security system, a fatigue detection component adapted to monitor crew alertness, and activity detection component to detect unauthorized activities such as smoking.

Additionally, the video analytics system 910 may receive location information, including latitude and longitude coordinates, of a signal, such as a stop signal, traffic signal, speed limit signal, and/or object signal near the tracks, from the asset owner. The video analytics system 910 then determines whether the location information received from the asset owner is correct. If the location information is correct, the video analytics system 910 stores the information and will not recheck the location information again for a predetermined amount of time, such as checking the location information on a monthly basis. If the location information is not correct, the video analytics system 910 determines the correct location information and reports the correct location information to the asset owners, stores the location information, and will not recheck the location information again for a predetermined amount of time, such as checking the location information on a monthly basis. Storing the location information provides easier detection of a signal, such as a stop signal, traffic signal, speed limit signal, and/or object signal near the tracks.

Supervised learning and/or reinforcement learning, using the supervised learning and/or reinforcement learning component 924, of the tracks is performed by making use of various information obtained from consecutive frames of video and/or images and also using additional information received from the data center 966 and a vehicle data component 934 that includes inertial sensor data and GPS data to determine learned data. The object detection and location component 926 utilizes the learned data received from the supervised learning and/or reinforcement learning component 924 and specific information about the mobile asset 964 and railroad such as track width and curvatures, ties positioning, and vehicle speed to differentiate the rail tracks, signs, signals, etc. from other objects to determine object detection data. The obstruction detection component 928 utilizes the object detection data received from the object detection and location component 926, such as information on obstructions present on or near the tracks and/or camera obstructions such as personnel blocking the cameras view and additional information from a weather component 936, a route/crew manifest data and GIS data component 938, and the vehicle data component 934 that includes inertial sensor data and GPS data to enhance accuracy and determine obstruction detection data. Mobile asset data from the vehicle data component 934 includes, but is not limited to, speed, location, acceleration, yaw/pitch rate, and rail crossings. Any additional information received and utilized from the data center 966 includes, but is not limited to, day and night details and geographic position of the mobile asset 964.

Infrastructure objects of interest, information processed by the track and/or object detection and infrastructure monitoring component 914, and diagnosis and monitoring information is sent to the data encoder 908 of the data recorder 902 via onboard data links 942 to encode the data. The data recorder 902 stores the encoded data in the crash hardened memory module 904, and optionally in the optional non-crash hardened removable storage device of the sixth embodiment, and sends the encoded information to a remote data manager 946 in the data center 966 via a wireless data link 944. The remote data manager 946 stores the encoded data in a remote data repository 948 in the data center 966.

To determine obstruction detection 928 or object detection 926 such as the presence of track in front of the asset, objects on and/or near the tracks, obstructions on or near the tracks, and/or obstructions blocking the cameras view, 964, the vehicle analytics system 910 uses the supervised learning and/or reinforcement learning component 924, or other artificial intelligence, object detection and location component 926, and obstruction detection component 928, and other image processing algorithms to process and evaluate camera images and video data from cameras 940 in real-time. The track and/or object detection and infrastructure monitoring component 914 uses the processed video data along with asset component 934 data that can include speed, GPS data, and inertial sensor data, weather component 936 data, and route/crew, manifest, and GIS component 938 data, to determine the external status determinations, such as lead and trail mobile assets, in real-time. When processing image and video data for track and/or object detection, for example, the video analytics system 910 automatically configures cameras 940 parameters needed for track detection, detects run through switches, counts the number of tracks, detects any additional tracks along the side of the asset 964, determines the track on which the asset 964 is currently running, detects the track geometry defects, detects track washout scenarios such as detecting water near the track within defined limits of the tracks, and detects missing slope or track scenarios. Object detection accuracy depends on the existing lighting condition in and around the asset 964. DARS 900 will handle the different lighting conditions with the aid of additional data collected from onboard the asset 964 and the data center 966. DARS 900 is enhanced to work in various lighting conditions, to work in various weather conditions, to detect more objects of interest, to integrate with existing database systems to create, audit, and update data automatically, to detect multiple tracks, to work consistently with curved tracks, to detect any obstructions, to detect any track defect that could possible cause safety issues, and to work in low cost embedded systems.

The internal and/or external status determination from the video analytics system 910, such as cab occupancy, object detection and location, such as track detection and detection of objects near tracks, and obstruction detection, such as obstructions on or near the tracks and obstructions blocking the cameras, is provided to the data recorder 902, along with any data from a vehicle management system (VMS) or digital video recorder component 932, via onboard data links 942. The data recorder 902 stores the internal and/or external status determination, the object detection and location component 926 data, and the obstruction detection component 928 data in the crash hardened memory module 904, and optionally in the non-crash hardened removable storage device of the sixth embodiment, and the remote data repository 948 via the remote data manager 946 located in the data center 966. A web server 958 provides the internal and/or external status determination, the object detection and location component 926 information, and the obstruction detection component 928 information to a remotely located user 968 via a web client 962 upon request.

The data encoder 908 encodes at least a minimum set of data that is typically defined by a regulatory agency. The data encoder 908 receives video, image and audio data from any of the cameras 940, the video analytics system 910, and the video management system 932 and compresses or encodes and time synchronizes the data in order to facilitate efficient real-time transmission and replication to the remote data repository 948. The data encoder 908 transmits the encoded data to the onboard data manager 906 which then sends the encoded video, image, and audio data to the remote data repository 948 via the remote data manager 946 located in the data center 966 in response to an on-demand request by the user 968 or in response to certain operating conditions being observed onboard the asset 964. The onboard data manager 906 and the remote data manager 946 work in unison to manage the data replication process. The remote data manager 946 in the data center 966 can manage the replication of data from a plurality of assets 964.

The onboard data manager 908 determines if the event detected, the internal and/or external status determination, object detection and location, and/or obstruction detection, should be queued or sent off immediately based on prioritization of the event detected. For example, in a normal operating situation, detecting an obstruction on the track is much more urgent than detecting whether someone is in the cab of the asset 964. The onboard data manager 908 also sends data to the queuing repository (not shown). In near real-time mode, the onboard data manager stores the encoded data received from the data encoder 908 and any event information in the crash hardened memory module 904 and in the queueing repository. After five minutes of encoded data has accumulated in the queuing repository, the onboard data manager 906 stores the five minutes of encoded data to a remote data repository 948 via the remote data manager 946 in the data center 966 over the wireless data link 944. In real-time mode, the onboard data manager 908 stores the encoded data received from the data encoder 908 and any event information to the crash hardened memory module 904 and to the remote data repository 948 via the remote data manager 946 in the data center 966 over the wireless data link 944 at a configurable rate, such as every second or every 0.10 seconds.

In this implementation, the onboard data manager 906 sends the video data, audio data, internal and/or external status determination, object detection and location information, obstruction detection information, and any other data or event information to the remote data repository 948 via the remote data manager 946 in the data center 966 through the wireless data link 944. Wireless data link 944 can be, for example, a wireless local area network (WLAN), wireless metropolitan area network (WMAN), wireless wide area network (WWAN), wireless virtual private network (WVPN), a cellular telephone network or any other means of transferring data from the data recorder 902 to, in this example, the remote data manager 946. The process of retrieving the data remotely from the asset 964 requires a wireless connection between the asset 964 and the data center 966. When a wireless data connection is not available, the data is stored and queued until wireless connectivity is restored.

In parallel with data recording, the data recorder 902 continuously and autonomously replicates data to the remote data repository 948. The replication process has two modes, a real-time mode and a near real-time mode. In real-time mode, the data is replicated to the remote data repository 10 every second. In near real-time mode, the data is replicated to the remote data repository 15 every five minutes. The rate used for near real-time mode is configurable and the rate used for real-time mode can be adjusted to support high resolution data by replicating data to the remote data repository 15 every 0.10 seconds. Near real-time mode is used during normal operation, under most conditions, in order to improve the efficiency of the data replication process.

Real-time mode can be initiated based on events occurring onboard the asset 964 or by a request initiated from the data center 966. A typical data center 966 initiated request for real-time mode is initiated when the remotely located user 968 has requested real-time information from the web client 962. A typical reason for real-time mode to originate onboard the asset 964 is the detection of an event or incident involving the asset 964 such as an operator initiating an emergency stop request, emergency braking activity, rapid acceleration or deceleration in any axis, or loss of input power to the data recorder 902. When transitioning from near real-time mode to real-time mode, all data not yet replicated to the remote data repository 948 is replicated and stored in the remote data repository 948 and then live replication is initiated. The transition between near real-time mode and real-time mode typically occurs in less than five seconds. After a predetermined amount of time has passed since the event or incident, predetermined amount of time of inactivity, or when the user 968 no longer desires real-time information from the asset 964, the data recorder 902 reverts to near real-time mode. The predetermined amount of time required to initiate the transition is configurable and is typically set to ten minutes.

When the data recorder 902 is in real-time mode, the onboard data manager 906 attempts to continuously empty its queue to the remote data manager 946, storing the data to the crash hardened memory module 940, and optionally to the optional non-crash hardened removable storage device of the sixth embodiment, and sending the data to the remote data manager 946 simultaneously.

Upon receiving video data, audio data, internal and/or external status determination, object detection and location information, obstruction detection information, and any other data or information to be replicated from the data recorder 902, the remote data manager 946 stores the data receives from the onboard data manager 906, such as encoded data and detected event data, to the remote data repository 948 in the data center 966. The remote data repository 948 can be, for example, cloud-based data storage or any other suitable remote data storage. When data is received, a process initiated that causes a data decoder 954 to decode the recently replicated data from the remote data repository 948 and send the decoded data to a track/object detection/location information component 950 that looks at the stored data for additional 'post-processed' events. The track/object detection/location information component 950 include an object/obstruction detection component for determining internal and/or external status determinations, object detection and location information, and obstruction detection information, in this implementation. Upon detecting internal and/or external information, object detection and location information, and/or obstruction detection information, the track/object detection/location information component 950 stores the information in the remote data repository 948.

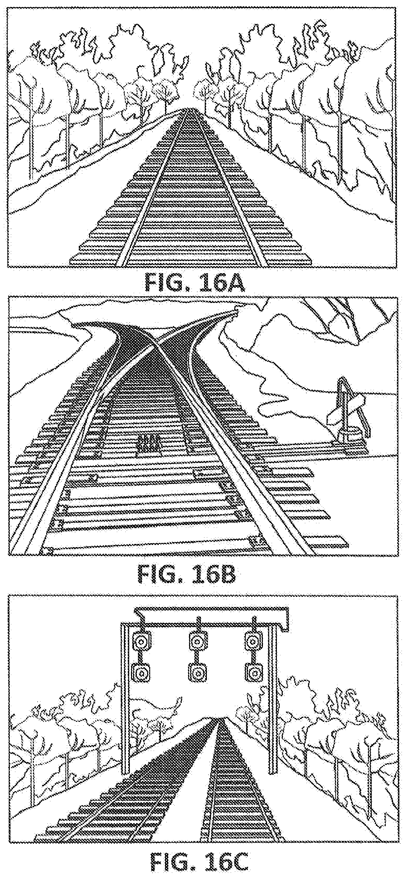

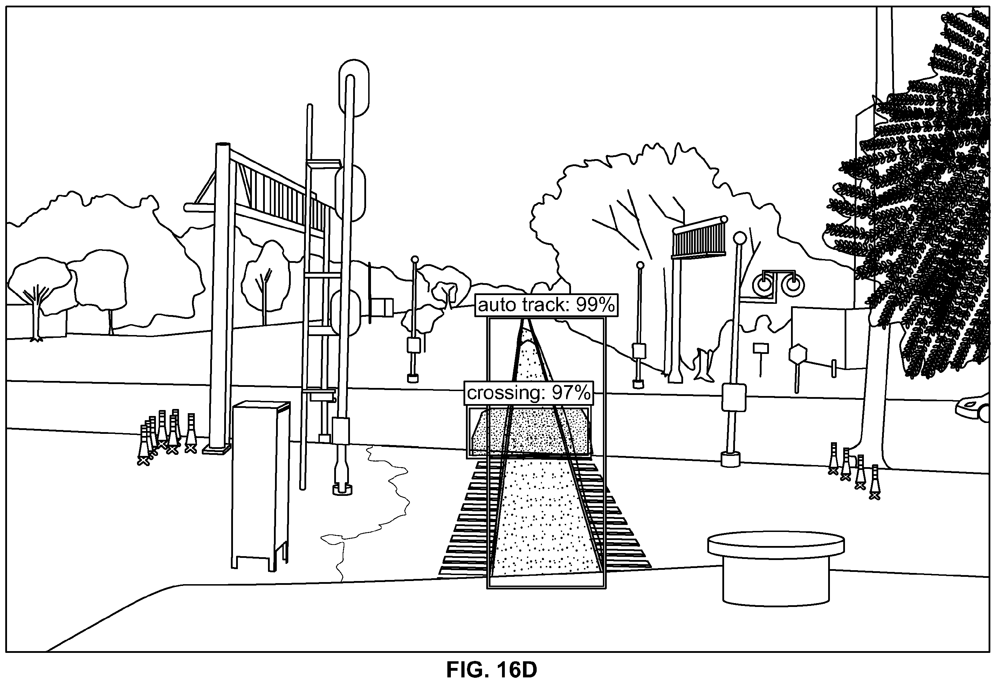

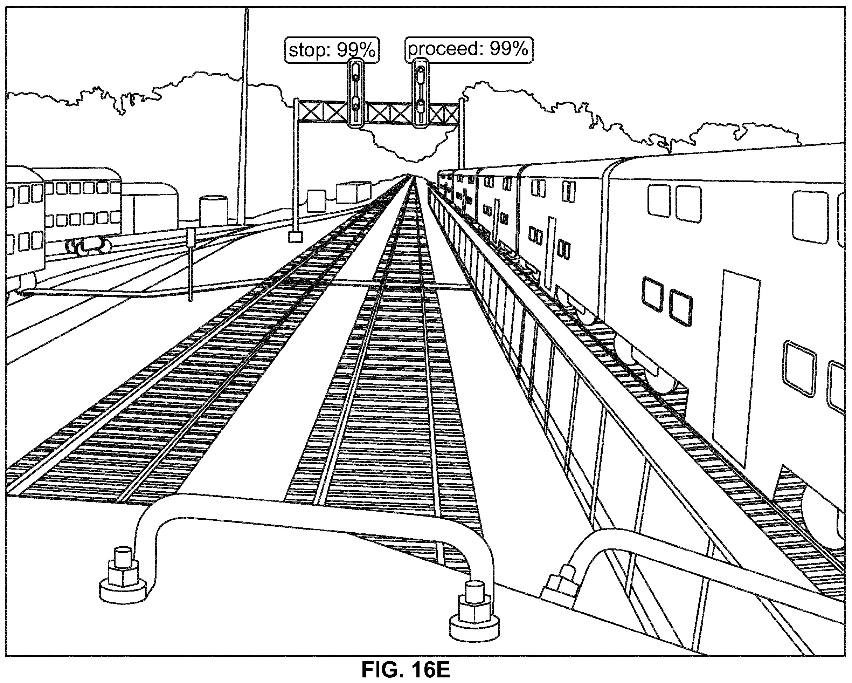

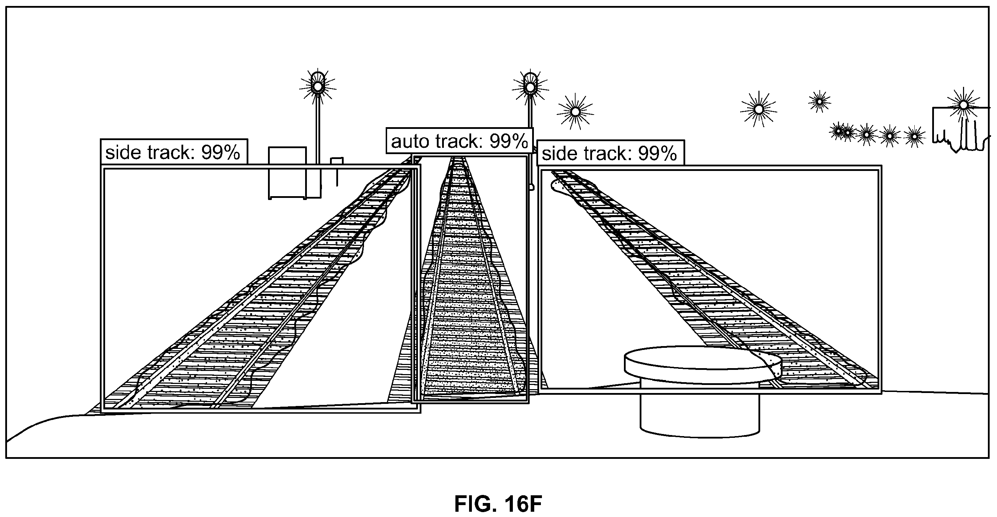

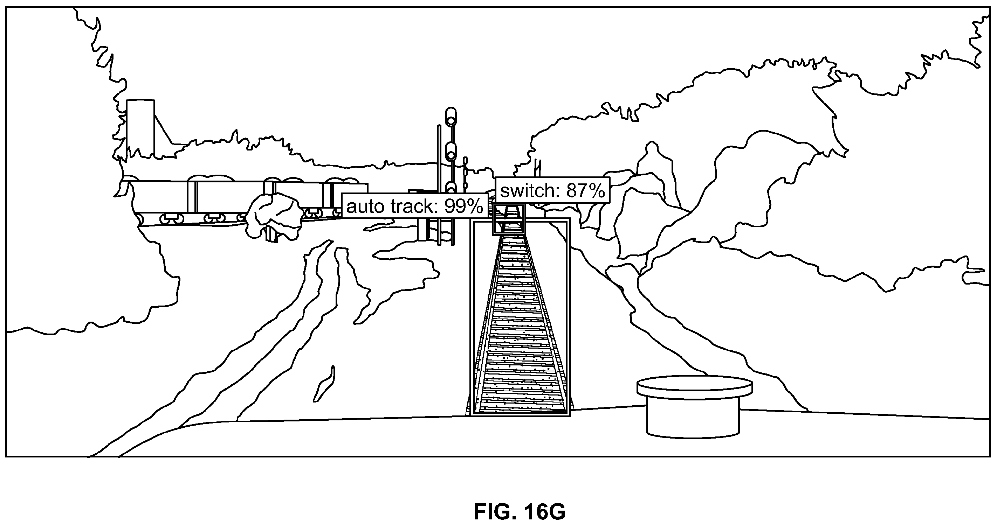

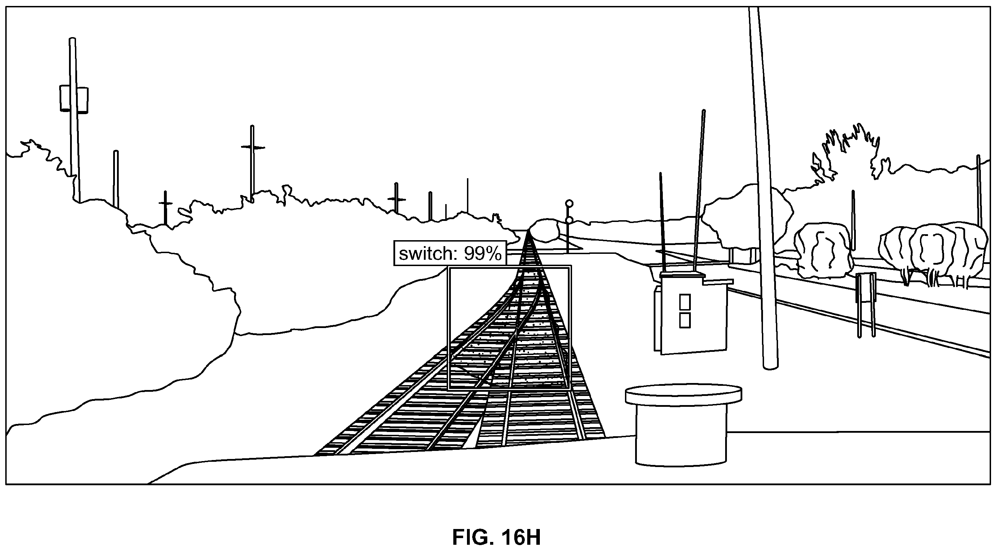

The remotely located user 968 can access video data, audio data, internal and/or external status determination, object detection and location information, obstruction detection information, and any other information stored in the remote data repository 948, including track information, asset information, and cab occupancy information, relating to the specific asset 964, or a plurality of assets, using the standard web client 962, such as a web browser, or a virtual reality device, such as the virtual reality device 828 of FIG. 8, which, in this implementation, can display thumbnail images of selected cameras. The web client 962 communicates the user's 968 request for information to a web server 958 through a network 960 using common web standards, protocols, and techniques. Network 960 can be, for example, the Internet. Network 960 can also be a local area network (LAN), metropolitan area network (MAN), wide area network (WAN), virtual private network (VPN), a cellular telephone network or any other means of transferring data from the web server 958 to, in this example, the web client 962. The web server 958 requests the desired data from the remote data repository 948 and the data decoder 954 obtains the requested data relating to the specific asset 964 from the remote data repository 948 upon request from the web server 958. The data decoder 954 decodes the requested data and sends the decoded data to a localizer 956. The localizer 956 identifies the profile settings set by user 968 by accessing the web client 962 and uses the profile settings to prepare the information being sent to the web client 962 for presentation to the user 968, as the raw encoded data and detected track/object detection/location information is saved to the remote data repository 948 using coordinated universal time (UTC) and international system of units (SI units). The localizer 956 converts the decoded data into a format desired by the user 968, such as the user's 968 preferred unit of measure and language. The localizer 956 sends the localized data in the user's 968 preferred format to the web server 958 as requested. The web server 958 then sends the localized data to the web client 962 for viewing and analysis, providing playback and real-time display of standard video and 360 degrees video, along with the internal and/or external status determination, object detection and location information, and obstruction detection information, such as the track and/or object detection (FIG. 16A), track and switch detection (FIG. 16B), track and/or object detection, count the number of tracks, and signal detection (FIG. 16C), crossing and track and/or object detection (FIG. 16D), dual overhead signal detection (FIG. 16E), multi-track and/or multi-object detection (FIG. 16F), switch and track and/or object detection (FIG. 16G), and switch detection (FIG. 16H).

The web client 962 is enhanced with a software application that provides the playback of 360 degrees video and/or other video in a variety of different modes. The user 968 can elect the mode in which the software application presents the video playback such as, for example, fisheye view, dewarped view, panorama view, double panorama view, and quad view.

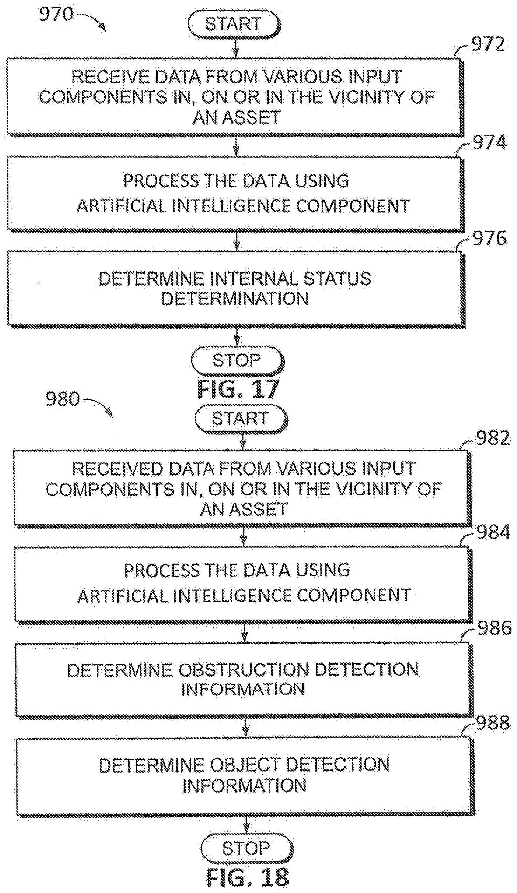

FIG. 17 is a flow diagram showing a process 970 for determining an internal status of the asset 964 in accordance with an implementation of this disclosure. The video analytics system 910 receives data signals from various input components 972, such as cameras 940, including but not limited to 360 degrees cameras, fixed cameras, narrow view cameras, wide view cameras, 360 degrees fisheye view cameras, radar, LIDAR, and/or other cameras, on, in or in vicinity of the asset 964, vehicle data component 934, weather component 936, and route/manifest and GIS component 938. The video analytics system 910 processes the data signals using supervised learning and/or reinforcement learning component 974 and determines an internal status 976 such as cab occupancy.

FIG. 18 is a flow diagram showing a process 980 for determining object detection/location and obstruction detection occurring externally and internally to the asset 964 in accordance with an implementation of this disclosure. The video analytics system 910 receives data signals from various input components 982, such as cameras 940, including but not limited to 360 degrees cameras, fixed cameras, narrow view cameras, wide view cameras, 360 degrees fisheye view cameras, radar, LIDAR, and/or other cameras, on, in or in vicinity of the asset 964, vehicle data component 934, weather component 936, and route/manifest and GIS component 938. The video analytics system 910 processes the data signals using the supervised learning and/or reinforcement learning component 924, the object detection/location component 926, and the obstruction detection component 928 984 and determines obstruction detection 986 and object detection and location 988 such as track presence.

For simplicity of explanation, process 970 and process 980 are depicted and described as a series of steps. However, steps in accordance with this disclosure can occur in various orders and/or concurrently. Additionally, steps in accordance with this disclosure may occur with other steps not presented and described herein. Furthermore, not all illustrated steps may be required to implement a method in accordance with the disclosed subject matter.

A real-time data acquisition and recording data sharing system works in conjunction with a real-time data acquisition and recording system and a viewer which provides real-time, or near real-time, access to a wide range of data, such as event and operational data, video data, and audio data, of a high value asset, such as a locomotive for example, to remotely located users such as asset owners, operators and investigators. The data acquisition and recording system records data relating to the asset and streams the data to a remote data repository and remotely located users prior to, during, and after an incident has occurred. The data is streamed to the remote data repository in real-time, or near real-time, making information available at least up to the time of an incident or emergency situation, thereby virtually eliminating the need to locate and download the "black box" in order to investigate an incident involving the asset and eliminating the need to interact with the data acquisition and recording system on the asset to request a download of specific data, to locate and transfer files, and to use a custom application to view the data. The real-time data acquisition and recording system retains typical recording capability and adds the ability to stream data to a remote data repository and remote end users prior to, during, and after an incident.

A remotely located user, such as an asset owner, operator, and/or investigator, may access a common web browser to navigate to live and/or historic desired data relating to a selected asset to view and analyze the operational efficiency and safety of assets in real-time or near real-time. The ability to view operations in real-time, or near real-time, enables rapid evaluation and adjustment of behavior. During an incident, for example, real-time information and/or data can facilitate triaging the situation and provide valuable information to first responders. During normal operation, for example, near real-time information and/or data can be used to audit crew performance and to aid network wide situational awareness.

The remotely located user may access a common web browser to use the viewer and navigate to desired data relating to a selected asset to view and analyze the operational efficiency and safety of assets in real-time or near real-time. The viewer provides the ability to view operations and/or 360 degree video in real-time, or near real-time, which enables rapid evaluation and adjustment of crew behavior. Owners, operators, and investigators can view and analyze the operational efficiency, safety of people, vehicles, and infrastructure and can investigate or inspect an incident. During an incident, for example, 360 degree video can facilitate triaging the situation and provide valuable information to first responders and investigators. During normal operation, for example, 360 degree video can be used to audit crew performance and to aid network wide situational awareness. Additionally, remotely located users can view 360 degree videos with the viewer in various modes through the use of a virtual reality device, such as virtual reality device 828 of FIG. 8, or through a standard web client, such as a web browser, thereby eliminating the need to download and use external applications to watch the video.

The data sharing system allows the user to share data obtained from the data acquisition and recording system to remotely located users. The user can share data with remote recipient end users that have internet access and a modern web browser in a secure, controlled, tracked, and audited way. The user, instead of sharing files, shares a URL to the data. URL based data sharing enables the user to control, track, and audit sensitive data. The user will be able to share data to improve the safety of the world's transportation systems without fear of unauthorized data dissemination. The data can be shared by investigators using the web client with remotely located users without the need to locate and download the "black box."

Data may include, but is not limited to, analog and frequency parameters such as speed, pressure, temperature, current, voltage, and acceleration which originate from the asset and/or nearby assets, Boolean data such as switch positions, actuator position, warning light illumination, and actuator commands, global positioning system (GPS) data and/or geographic information system (GIS) data such as position, speed, and altitude, internally generated information such as the regulatory speed limit for an asset given its current position, video and image information from cameras located at various locations in, on or in the vicinity of the asset, audio information from microphones located at various locations in, on or in vicinity of the asset, information about the operational plan for the asset that is sent to the asset from a data center such as route, schedule, and cargo manifest information, information about the environmental conditions, including current and forecasted weather conditions, of the area in which the asset is currently operating in or is planned to operate in, asset control status and operational data generated by systems such as positive train control (PTC) in locomotives, and data derived from a combination from any of the above including, but not limited to, additional data, video, and audio analysis and analytics.

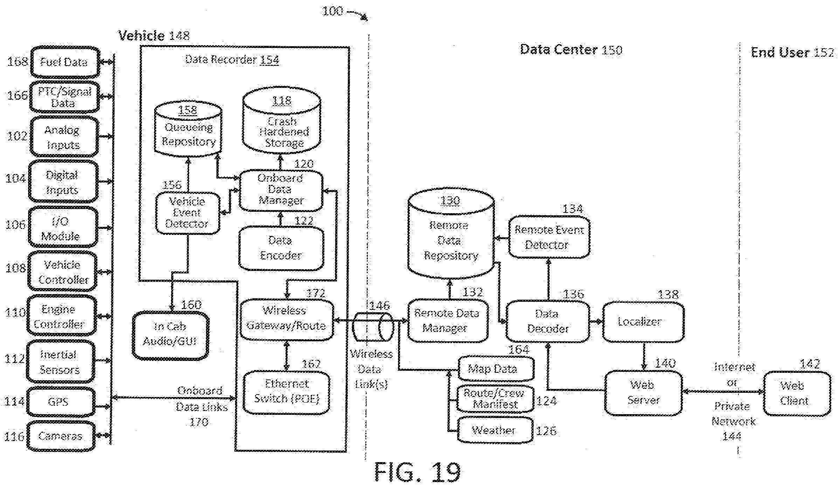

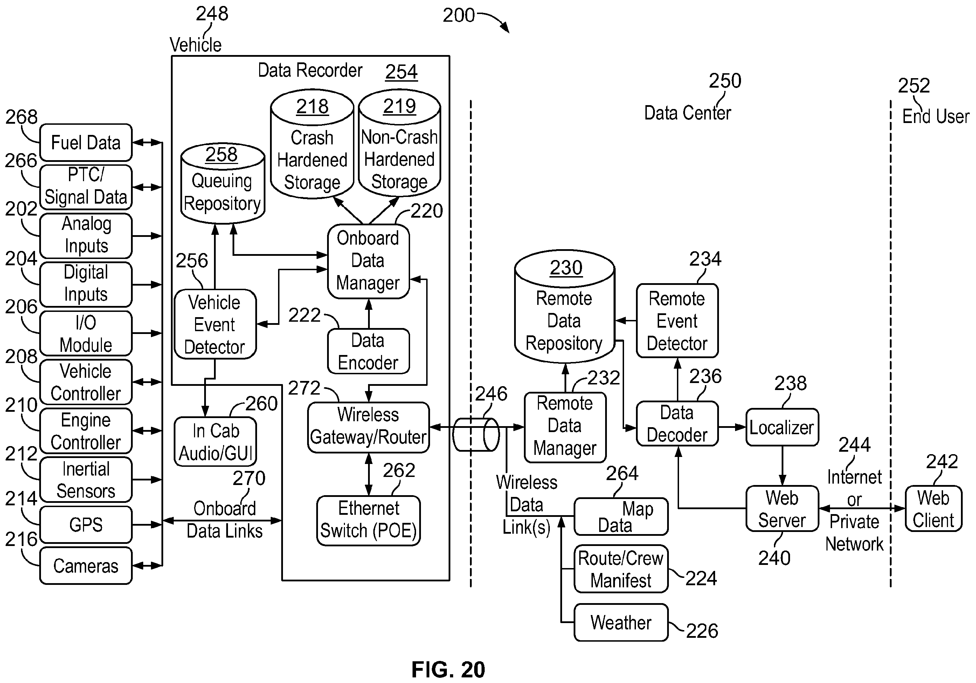

FIGS. 19 and 20 illustrate a field implementation of the first embodiment and the second embodiment, respectively, of the exemplary real-time data acquisition and recording system (DARS) 100, 200 in which aspects of the disclosure can be implemented. DARS 100, 200 includes a data recorder 154, 254 that is installed on a vehicle or mobile asset 148, 248 and communicates with any number of various information sources through any combination of onboard wired and/or wireless data links 170, 270, such as a wireless gateway/router, or off board information sources via a data center 150, 250 of DARS 100, 200 via data links such as wireless data links 146. Data recorder 154, 254 comprises an onboard data manager 120, 220, a data encoder 122, 222, a vehicle event detector 156, 256, a queueing repository 158, 258, and a wireless gateway/router 172, 272. Additionally, in this implementation, data recorder 154, 254 can include a crash hardened memory module 118, 218 and/or an Ethernet switch 162, 262 with or without power over Ethernet (POE). An exemplary hardened memory module 118, 218 can be, for example, a crashworthy event recorder memory module that complies with the Code of Federal Regulations and the Federal Railroad Administration regulations, a crash survivable memory unit that complies with the Code of Federal Regulations and the Federal Aviation Administration regulations, a crash hardened memory module in compliance with any applicable Code of Federal Regulations, or any other suitable hardened memory device as is known in the art. In the second embodiment, shown in FIGS. 2 and 20, the data recorder 254 can further include an optional non-crash hardened removable storage device 219.

The wired and/or wireless data links 170, 270 can include any one of or combination of discrete signal inputs, standard or proprietary Ethernet, serial connections, and wireless connections. Ethernet connected devices may utilize the data recorder's 154, 254 Ethernet switch 162, 262 and can utilize POE. Ethernet switch 162, 262 may be internal or external and may support POE. Additionally, data from remote data sources, such as a map component 164, 264, a route/crew manifest component 124, 224, and a weather component 126, 226 in the implementation of FIGS. 1,2, 19, and 20, is available to the onboard data manager 120, 220 and the vehicle event detector 156, 256 from the data center 150, 250 through the wireless data link 146, 246 and the wireless gateway/router 172, 272.

Data recorder 154, 254 gathers data or information from a wide variety of sources, which can vary widely based on the asset's configuration, through onboard data links 170, 270. The data encoder 122, 222 encodes at least a minimum set of data that is typically defined by a regulatory agency. In this implementation, the data encoder 122, 222 receives data from a wide variety of asset 148, 248 sources and data center 150, 250 sources. Information sources can include any number of components in the asset 148, 248, such as any of analog inputs 102, 202, digital inputs 104, 204, I/O module 106, 206, vehicle controller 108, 208, engine controller 110, 210, inertial sensors 112, 212, global positioning system (GPS) 114, 214, cameras 116, 216, positive train control (PTC)/signal data 166, 266, fuel data 168, 268, cellular transmission detectors (not shown), internally driven data and any additional data signals, and any of number of components in the data center 150, 250, such as any of the route/crew manifest component 124, 224, the weather component 126, 226, the map component 164, 264, and any additional data signals. The cameras 116, 216, or image measuring devices and/or video measuring devices, include, but are not limited to, 360 degrees cameras, fixed cameras, narrow view cameras, wide view cameras, 360 degrees fisheye view cameras, and/or other cameras inside and outside the asset 148. The data encoder 122, 222 compresses or encodes the data and time synchronizes the data in order to facilitate efficient real-time transmission and replication to a remote data repository 130, 230. The data encoder 122, 222 transmits the encoded data to the onboard data manager 120, 220 which then saves the encoded data in the crash hardened memory module 118, 218 and the queuing repository 158, 258 for replication to the remote data repository 130, 230 via a remote data manager 132, 232 located in the data center 150, 250. Optionally, the onboard data manager 120, 220 can save a tertiary copy of the encoded data in the non-crash hardened removable storage device 219 of the second embodiment shown in FIGS. 2 and 20. The onboard data manager 120, 220 and the remote data manager 132, 232 work in unison to manage the data replication process. A single remote data manager 132, 232 in the data center 150, 250 can manage the replication of data from a plurality of assets 148, 248.

The data from the various input components and data from an in-cab audio/graphic user interface (GUI) 160, 260 are sent to a vehicle event detector 156, 256. The vehicle event detector 156, 256 processes the data to determine whether an event, incident or other predefined situation involving the asset 148, 248 has occurred. When the vehicle event detector 156, 256 detects signals that indicate a predefined event occurred, the vehicle event detector 156, 256 sends the processed data that a predefined event occurred along with supporting data surrounding the predefined event to the onboard data manager 120, 220. The vehicle event detector 156, 256 detects events based on data from a wide variety of sources, such as the analog inputs 102, 202, the digital inputs 104, 204, the I/O module 106, 206, the vehicle controller 108, 208, the engine controller 110, 210, the inertial sensors 112, 212, the GPS 114, 214, the cameras 116, 216, the route/crew manifest component 124, 224, the weather component 126, 226, the map component 164, 264, the PTC/signal data 166, 266, and the fuel data 168, 268, which can vary based on the asset's configuration. When the vehicle event detector 156, 256 detects an event, the detected asset event information is stored in a queuing repository 158, 258 and can optionally be presented to the crew of the asset 148, 248 via the in-cab audio/graphical user interface (GUI) 160, 260.

The onboard data manager 120, 220 also sends data to the queuing repository 158. In near real-time mode, the onboard data manager 120, 220 stores the encoded data received from the data encoder 122, 222 and any event information in the crash hardened memory module 118, 218 and in the queueing repository 158, 258. In the second embodiment of FIGS. 2 and 20, the onboard data manager 220 can optionally store the encoded data in the non-crash hardened removable storage device 219. After five minutes of encoded data has accumulated in the queuing repository 158, 258, the onboard data manager 120, 220 stores the five minutes of encoded data to the remote data repository 130, 230 via the remote data manager 132, 232 in the data center 150, 250 over the wireless data link 146, 256 accessed through the wireless gateway/router 172, 272. In real-time mode, the onboard data manager 120, 220 stores the encoded data received from the data encoder 122, 222 and any event information to the crash hardened memory module 118, 218, and optionally in the non-crash hardened removable storage device 219 of FIGS. 2 and 20, and to the remote data repository 130, 230 via the remote data manager 132, 232 in the data center 150, 250 over the wireless data link 146, 246 accessed through the wireless gateway/router 172, 272. The onboard data manager 120, 220 and the remote data manager 132, 232 can communicate over a variety of wireless communications links, such as Wi-Fi, cellular, satellite, and private wireless systems utilizing the wireless gateway/router 172, 272. Wireless data link 146, 246 can be, for example, a wireless local area network (WLAN), wireless metropolitan area network (WMAN), wireless wide area network (WWAN), a private wireless system, a cellular telephone network or any other means of transferring data from the data recorder 154, 254 of DARS 100, 200 to, in this example, the remote data manager 130, 230 of DARS 100, 200. When a wireless data connection is not available, the data is stored in memory and queued in queueing repository 158, 258 until wireless connectivity is restored and the data replication process can resume.

In parallel with data recording, data recorder 154, 254 continuously and autonomously replicates data to the remote data repository 130, 230. The replication process has two modes, a real-time mode and a near real-time mode. In real-time mode, the data is replicated to the remote data repository 130, 230 every second. In near real-time mode, the data is replicated to the remote data repository 130, 230 every five minutes. The rate used for near real-time mode is configurable and the rate used for real-time mode can be adjusted to support high resolution data by replicating data to the remote data repository 130, 230 every 0.10 seconds. When the DARS 100, 200 is in near real-time mode, the onboard data manager 120, 220 queues data in the queuing repository 158, 258 before replicating the data to the remote data manager 132, 232. The onboard data manager 120, 220 also replicates the vehicle event detector information queued in the queueing repository 158, 258 to the remote data manager 132, 232. Near real-time mode is used during normal operation, under most conditions, in order to improve the efficiency of the data replication process.

Real-time mode can be initiated based on events occurring and detected by the vehicle event detector 156, 256 onboard the asset 148, 248 or by a request initiated from the data center 150, 250. A typical data center 150, 250 initiated request for real-time mode is initiated when a remotely located user 152, 252 has requested real-time information from a web client 142, 242. A typical reason for real-time mode to originate onboard the asset 148, 248 is the detection of an event or incident by the vehicle event detector 156, 256 such as an operator initiating an emergency stop request, emergency braking activity, rapid acceleration or deceleration in any axis, or loss of input power to the data recorder 154, 254. When transitioning from near real-time mode to real-time mode, all data not yet replicated to the remote data repository 130, 230 is replicated and stored in the remote data repository 130, 230 and then live replication is initiated. The transition between near real-time mode and real-time mode typically occurs in less than five seconds. After a predetermined amount of time has passed since the event or incident, a predetermined amount of time of inactivity, or when the user 152, 252 no longer desires real-time information from the asset 148, 248, the data recorder 154, 254 reverts to near real-time mode. The predetermined amount of time required to initiate the transition is configurable and is typically set to ten minutes.

When the data recorder 154, 254 is in real-time mode, the onboard data manager 120, 220 attempts to continuously empty its queue to the remote data manager 132, 232, storing the data to the crash hardened memory module 118, 218, and optionally to the non-crash hardened removable storage device 219 of FIGS. 2 and 20, and sending the data to the remote data manager 132, 232 simultaneously. The onboard data manager 120, 220 also sends the detected vehicle information queued in the queuing repository 158, 258 to the remote data manager 132, 232.

Upon receiving data to be replicated from the data recorder 154, 254, along with data from the map component 164, 264, the route/crew manifest component 124, 224, and the weather component 126, 226, the remote data manager 132, 232 stores the compressed data to the remote data repository 130, 230 in the data center 150, 250 of DARS 100, 200. The remote data repository 130, 230 can be, for example, cloud-based data storage or any other suitable remote data storage. When data is received, a process is initiated that causes a data decoder 136, 236 to decode the recently replicated data for/from the remote data repository 130, 230 and send the decoded data to a remote event detector 134, 234. The remote data manager 132, 232 stores vehicle event information in the remote data repository 130, 230. When the remote event detector 134, 234 receives the decoded data, it processes the decoded data to determine if an event of interest is found in the decoded data. The decoded information is then used by the remote event detector 134, 234 to detect events, incidents, or other predefined situations, in the data occurring with the asset 148, 248. Upon detecting an event of interest from the decoded data previously stored in the remote data repository 130, 230, the remote event detector 134, 234 stores the event information and supporting data in the remote data repository 130, 230. When the remote data manager 132, 232 receives remote event detector 134, 234 information, the remote data manager 132, 232 stores the information in the remote data repository 130, 230.

The remotely located user 152, 252 can access information, including vehicle event detector information, relating to the specific asset 148, 248, or a plurality of assets, using the standard web client 142, 242, such as a web browser, or a virtual reality device, such as virtual reality device 828 of FIG. 8, which, in this implementation, can display thumbnail images from selected cameras. The web client 142, 242 communicates the user's 152, 252 request for information to a web server 140, 240 through a network 144, 244 using common web standards, protocols, and techniques. Network 144, 244 can be, for example, the Internet. Network 144, 244 can also be a local area network (LAN), metropolitan area network (MAN), wide area network (WAN), virtual private network (VPN), a cellular telephone network or any other means of transferring data from the web server 140, 240 to, in this example, the web client 142, 242. The web server 140, 240 requests the desired data from the data decoder 136, 236. The data decoder 136, 236 obtains the requested data relating to the specific asset 148, 248, or a plurality of assets, from the remote data repository 130, 230 upon request from the web server 140, 240. The data decoder 136, 236 decodes the requested data and sends the decoded data to a localizer 138, 238. Localization is the process of converting data to formats desired by the end user, such as converting the data to the user's preferred language and units of measure. The localizer 138, 238 identifies the profile settings set by user 152, 252 by accessing the web client 142, 242 and uses the profile settings to prepare the information being sent to the web client 142, 242 for presentation to the user 152, 252, as the raw encoded data and detected event information is saved to the remote data repository 130, 230 using coordinated universal time (UTC) and international system of units (SI units). The localizer 138, 238 converts the decoded data into a format desired by the user 152, 252, such as the user's 152, 252 preferred language and units of measure. The localizer 138, 238 sends the localized data in the user's 152, 252 preferred format to the web server 140, 240 as requested. The web server 140, 240 then sends the localized data of the asset, or plurality of assets, to the web client 142, 242 for viewing and analysis, providing playback and real-time display of standard video and 360 degree video through the viewer. The web client 142, 242 can display and the user 152, 252 can view the data, video, and audio for a single asset or simultaneously view the data, video, and audio for a plurality of assets. The web client 142, 242 can also provide synchronous playback and real-time display of data along with the plurality of video and audio data from both standard and 360 degree video sources on, in, or in the vicinity of the asset, nearby assets, and/or remotely located sites. The web client 142, 242 can play the video data on the viewer for the user 152, 252 who can interact with the video for viewing and analysis. The user 152, 252 can also download the video data using the web client 142, 242 and can then use the virtual reality device, such as virtual reality device 828 of FIG. 8, to interact with the video data on the viewer for viewing and analysis.

The web client 142, 242 is enhanced with a software application that provides the playback of video data and/or 360 degree video, in a variety of different modes. The user 152, 252 can elect the mode in which the software application presents the video playback such as, for example, fisheye view, dewarped panorama view, dewarped double panorama view, and dewarped quad view.

The user 152, 252 can further share data with remotely located recipient end users that have internet access and a modern web browser in a secure, controlled, tracked, and audited way using the data sharing system of the present disclosure. The user 152, 252, instead of sharing files, shares a URL to the data. URL based data sharing enables the user to control, track, and audit sensitive data. The user will be able to share data to improve the safety of the world's transportation systems without fear of unauthorized data dissemination. An administrator has permission to increase and/or decrease the native permissions of the user 152, 252 and each remotely located recipient end user. The native permission of the user 152, 252 and each remotely located recipient end user determines the permissions that the particular remotely located recipient end user has to view data on the web client 142, 242. The data sharing system is used by asset 148, 248 owners, operators, and investigators to share real-time data about operational efficiency and safety of vehicles. The sharing of data enables rapid evaluation and adjustment of behavior.

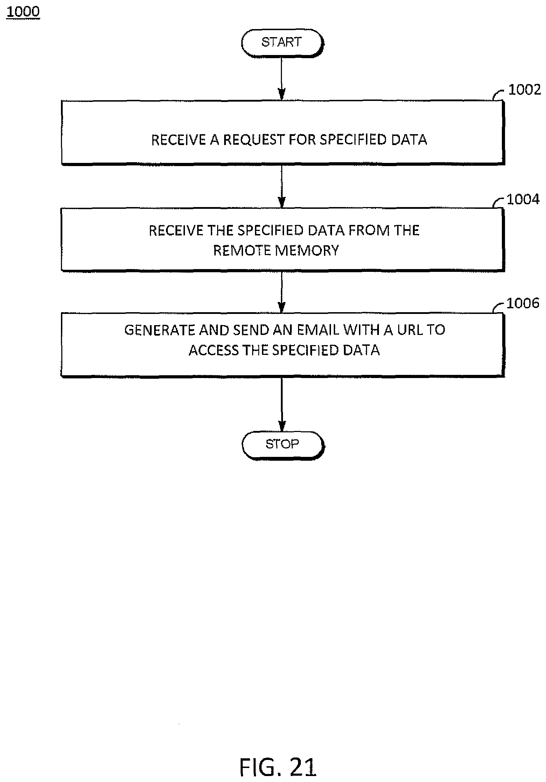

FIG. 21 is a flow diagram showing a process 1000 for sharing data and/or information from the asset 148, 248 through the web browser 142, 242 or virtual reality device, such as virtual reality device 828 of FIG. 8. Typically, the user 152, 252 will request that the data center 150, 250 share asset 148, 248 data using the web client 142, 242 1002 (FIG. 3). A typical reason for data sharing is the detection of an incident, such as an operator initiating an emergency stop request, emergency braking activity, rapid acceleration or deceleration in any axis, and/or loss of input power to DARS 100, 200. No file will be downloaded or sent to the remotely located recipient end user. User 152, 252 will not be able to share more than what their native permission on the web client 142, 242 allows. The remotely located recipient end user will be able to see data based on their own native permissions on the web client 142, 242. Such sharing activity is logged by the web client 142, 242 in the data center 150, 250. The administrator is able to share data to a plurality of users 152, 252 who natively do not have access to the data through the web client 142, 242 using permission escalation. Such permission escalation activity will also be logged by the web client 142, 242 in the data center 150, 250.

As previously discussed, the user 152, 252 accesses information, including vehicle event detector 156, 256 information, using the web client 142, 242. Using common web standards, protocols, and techniques, such as internet or private network 144, 244, the web client 142, 242 communicates with the web server 140, 240 the information desired by the user 152, 252. The web server 140, 240 requests the desired data from the data decoder 136, 236. Data is extracted by the data decoder 136, 236 and then the data is localized by the localizer 138, 238, converting the data to formats desired by the user 152, 252 as described above. The web server 140, 240 then sends the localized data to the web client 142, 242 for viewing and analysis 1004 (FIG. 21).

The sharer end user 152, 252 can share this information with a plurality of remotely located recipient end users, including vehicle event detector 156, 256 information and video data using the web client 142, 242, regardless of whether the recipient end user has a pre-registered account on the web client 142, 242. The sharer end user 152, 252 can share the information and data with a plurality of remotely located recipient end users regardless of whether the recipient end user has a pre-registered account on the web client 142, 242. During this process the web client 142, 242 will generate an email with a URL that points to the data in the data center 150, 250 1006 (FIG. 21). The remotely located recipient end user receives the email with the URL address to access the data. The URL address is not a link to files. No files are shared with the recipient end users. The data is not a discrete file, but a range of data pulled from the remote data repository 15 based on the shared web-based viewer link. The URL address sent via email is a link to the web-based viewer that allows the recipient end user to view a specific segment of data synchronized with still images and video via the web-based viewer. When the remotely located recipient end user clicks on the URL, they will be able to access the shared information using their own web client 142, 242 and the sharing activity will be logged by the web client 142, 242 in the data center 150, 250.

For simplicity of explanation, process 1000 is depicted and described as a series of steps. However, steps in accordance with this disclosure can occur in various orders and/or concurrently. Additionally, steps in accordance with this disclosure may occur with other steps not presented and described herein. Furthermore, not all illustrated steps may be required to implement a method in accordance with the disclosed subject matter.

As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, "X includes at least one of A and B" is intended to mean any of the natural inclusive permutations. That is, if X includes A; X includes B; or X includes both A and B, then "X includes at least one of A and B" is satisfied under any of the foregoing instances. The articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment, aspect or implementation unless described as such.

While the present disclosure has been described in connection with certain embodiments, it is to be understood that the present disclosure is not to be limited to the disclosed embodiments but, on the contrary, is intended to cover various modifications within the scope of the appended claims.

## Claims

1. A method for processing, storing, and transmitting data from at least one mobile asset (148, 248, 830, 964) comprising:
receiving, using a data recorder (154, 254, 808, 902) onboard the mobile asset (148, 248, 830, 964), data (306) based on at least one data signal from at least one of:
at least one data source onboard the mobile asset (148, 248, 830, 964); and
at least one data source remote from the mobile asset (148, 248, 830, 964);
encoding, using a data encoder (122, 222, 814, 908) of the data recorder (154, 254, 808, 902), a predetermined amount of the data into encoded data;
appending, using an onboard data manager (120, 220, 812, 906) of the data recorder (154, 254, 808, 902), the encoded data to a data segment;
storing, using the onboard data manager (120, 220, 812, 906) of the data recorder (154, 254, 808, 902), at least one of the encoded data and the data segment at a configurable first predetermined rate in at least one of a local memory component of the data recorder (154, 254, 808, 902) and a queueing repository of the data recorder (154, 254, 808, 902);
sending, using the onboard data manager (120, 220, 812, 906), at least one of the encoded data and the data segment to a remote data manager (132, 232, 818, 946) via a wireless data link (146, 246, 816, 944) at a configurable second predetermined rate, wherein the second predetermined rate is in the range of and including zero seconds and five minutes;
storing, using the remote data manager (132, 232, 818, 946), at least one of the encoded data and the data segment to a remote data repository (10, 15, 130, 230, 820, 948);
receiving, using a web server (140, 240, 822, 958), a request from a first user (152, 252, 834, 968), the request comprising at least one email address of at least one second user (152, 252, 834, 968) and specified data (306) selected by the first user (152, 252, 834, 968) stored in the remote data repository (130, 230, 820, 948);
identifying the specified data in the remote data repository (130, 230, 820, 948);
determining a uniform resource locator (URL) comprising a link to a web-based viewer adapted to provide access to view the specified data on a first condition that the first user (152, 252) comprises first native permissions allowing access to view the specified data;
generating an email comprising the URL; and
sending, using the web server (140, 240, 822, 958), the email to the at least one email address.

2. The method of claim 1, further comprising:
requesting, using the web server (140, 240, 822, 958), the specified data from a data decoder (136, 236, 954); and
decoding, using the data decoder (136, 236, 954), the specified data.

3. The method of claim 2, further comprising:
processing, using a localizer (138, 238, 956), the specified data into processed specified data comprising a predetermined language and at least one predetermined unit of measurement.

4. The method of claim 1, further comprising:
storing, using a web client (142, 242, 826, 962), a record in the remote data repository (130, 230, 820, 948), the record comprising at least one of the email, the URL, the specified data, the first user (152, 252), and the at least one second user (834, 968).

5. The method of claim 1, wherein:
the at least one data source onboard the mobile asset (148, 248, 830, 964) includes at least one of analog inputs (102, 202), digital inputs (104, 204), input and output modules, vehicle controller (108, 208), engine controller (110, 210), inertial sensors (112, 212), global positioning system, at least one camera (116, 216, 802, 940), fuel data (168, 268), positive train control (PTC) signal data, 360 degrees camera (116, 216, 802, 940), fixed camera (116, 216, 802, 940), narrow view camera (116, 216, 802, 940), wide view camera (116, 216, 802, 940), and 360 degrees fisheye view camera (116, 216, 802, 940) and wherein the at least one data source remote from the mobile asset (148, 248, 830, 964) includes at least one of map components (164, 264), route and crew manifest component (124, 224), weather component (126, 226, 936), 360 degrees camera (116, 216, 802, 940), fixed camera (116, 216, 802, 940), narrow view camera (116, 216, 802, 940), wide view camera (116, 216, 802, 940), and 360 degrees fisheye view camera (116, 216, 802, 940); and
the data includes at least one of speed, pressure, temperature, current, voltage, acceleration from the mobile asset (148, 248, 830, 964), acceleration from remote mobile assets (148, 248, 830, 964), switch positions, actuator positions, warning light illumination, actuator commands, position, altitude, internally generated information, video information, audio information, route, schedule, cargo manifest information, environmental conditions, current weather conditions, and forecasted weather conditions.

6. The method of claim 1, further comprising:
displaying the specified data on a web browser of the at least one second user (834, 968) when the at least one second user (834, 968) selects the URL provided in the email on a second condition that the at least one second user (834, 968) comprises second native permissions allowing access to the specified data;
optionally, wherein an administrator can at least one of increase and decrease the first native permissions of the first user (152, 252) and the second native permissions of the at least one second user (834, 968).

7. The method of claim 1, wherein the first user (152, 252) can share the URL with a plurality of remotely located recipient end users (834, 968).

8. The method of claim 1, wherein the at least one second user (834, 968) does not need to have a preregistered account.

9. A system for processing, storing, and transmitting data from at least one mobile asset (148, 248, 830, 964) comprising:
a data recorder (154, 254, 808, 902) onboard the mobile asset (148, 248, 830, 964) comprising at least one local memory component, a data encoder (122, 222, 814, 908), an onboard data manager (120, 220, 812, 906), and a queueing repository (158, 258), the data recorder (154, 254, 808, 902) adapted to receive the data based on at least one data signal from at least one of:
at least one data source onboard the mobile asset (148, 248, 830, 964); and
at least one data source remote from the mobile asset (148, 248, 830, 964);
the data encoder (122, 222, 814, 908) adapted to encode a predetermined amount of the data into encoded data;
the onboard data manager (120, 220, 812, 906) adapted to:
append the encoded data to a data segment;
store at least one of the encoded data and the data segment at a configurable first predetermined rate in at least one of the at least one local memory component and the queueing repository (158, 258); and
send at least one of the encoded data and the data segment to a remote data manager (132, 232, 818, 946) via a wireless data link (146, 246, 816, 944) at a configurable second predetermined rate, wherein the second predetermined rate is in the range of and including zero seconds and five minutes, the remote data manager (132, 232, 818, 946) adapted to store at least one of the encoded data and the data segment to a remote data repository (130, 230, 820, 948); and
a web server (140, 240, 822, 958) adapted to receive a request from a first user (152, 252), determine a uniform resource locator (URL) comprising a link to a web-based viewer adapted to provide access to view specified data (306) selected by the first user (152, 252) on a first condition that the first user (152, 252) comprises first native permissions allowing access to the specified data, generate an email comprising the URL, and send the email to at least one email address of at least one second user (834, 968), the request comprising the at least one email address of the at least one second user (834, 968) and the specified data stored in the remote data repository (130, 230, 820, 948).

10. The system of claim 9, further comprising:
a remote data decoder (136, 236, 954) adapted to decode the specified data into decoded data.

11. The system of claim 9, further comprising:
a localizer (138, 238, 956) adapted to process the specified data into processed specified data (306) comprising a predetermined language and at least one predetermined unit of measurement.

12. The system of claim 9, further comprising:
a web client (142, 242, 826, 962) adapted to store a record in the remote data repository (130, 230, 820, 948), the record comprising at least one of the email, the URL, the specified data, the first user (152, 252), and the at least one second user (834, 968).

13. The system of claim 9, further comprising: a web browser configured to display the specified data when the at least one second user (834, 968) selects the URL provided in the email on a second condition that the at least one second user (834, 968) comprises second native permissions allowing access to view the specified data; and
optionally, wherein an administrator is configured to at least one of increase and decrease the first native permissions of the first user (152, 252) and the second native permissions of the at least one second user (834, 968).

14. The system of claim 9, wherein the first user (152, 252) can share the URL with a plurality of remotely located recipient end users (834, 968).

15. The system of claim 9, wherein the at least one second user (834, 968) does not need to have a preregistered account.

16. The system of claim 9, further comprising:
a first web client adapted to send the request for specified data to the web server;
the web server adapted to request the specified data from a data decoder;
the data decoder adapted to decode the specified data into decoded specified data; and
a localizer adapted to process the decoded specified data into processed specified data comprising a predetermined language and at least one predetermined unit of measurement.

17. The method of claim 1, further comprising:
sending the request for the specified data from a first web client of the first user to the web server;
requesting, using the web server, the specified data from a data decoder;
decoding, using the data decoder, the specified data into decoded specified data; and
processing, using a localizer, the decoded specified data into processed specified data comprising a predetermined language and at least one predetermined unit of measurement.

18. The system of claim 9, further comprising:
at least one second web client adapted to display the specified data on a web browser of the at least one second user when the at least one second user selects the URL provided in the email on a condition that the at least one second user comprises second native permissions allowing access to view the specified data.

## Patentansprüche

1. Verfahren zum Verarbeiten, Speichern und Übertragen von Daten von mindestens einem mobilen Asset (148, 248, 830, 964), umfassend:
Empfangen von Daten (306) unter Verwendung eines Datenaufzeichners (154, 254, 808, 902) an Bord des mobilen Assets (148, 248, 830, 964) basierend auf mindestens einem Datensignal von mindestens einem von Folgenden:
mindestens einer Datenquelle an Bord des mobilen Assets (148, 248, 830, 964); und
mindestens einer Datenquelle, die von dem mobilen Asset (148, 248, 830, 964) entfernt ist;
Codieren einer vorbestimmten Menge der Daten unter Verwendung eines Datencodierers (122, 222, 814, 908) des Datenaufzeichners (154, 254, 808, 902) in codierte Daten;
Anhängen der codierten Daten unter Verwendung eines bordeigenen Datenmanagers (120, 220, 812, 906) des Datenaufzeichners (154, 254, 808, 902) an ein Datensegment;
Speichern mindestens eines von den codierten Daten und dem Datensegment unter Verwendung des bordeigenen Datenmanagers (120, 220, 812, 906) des Datenaufzeichners (154, 254, 808, 902) mit einer konfigurierbaren ersten vorbestimmten Rate in mindestens einem von einer lokalen Speicherkomponente des Datenaufzeichners (154, 254, 808, 902) und einem Warteschlangenrepository des Datenaufzeichners (154, 254, 808, 902);
Senden mindestens eines von den codierten Daten und dem Datensegment unter Verwendung des bordeigenen Datenmanagers (120, 220, 812, 906) über einen drahtlosen Datenlink (146, 246, 816, 944) mit einer konfigurierbaren zweiten vorbestimmten Rate an einen entfernten Datenmanager (132, 232, 818, 946), wobei die zweite vorbestimmte Rate in dem Bereich von null Sekunden bis einschließlich fünf Minuten liegt;
Speichern mindestens eines von den codierten Daten und dem Datensegment unter Verwendung des entfernten Datenmanagers (132, 232, 818, 946) in einem entfernten Datenrepository (10, 15, 130, 230, 820, 948);
Empfangen einer Anforderung von einem ersten Benutzer (152, 252, 834, 968) unter Verwendung eines Webservers (140, 240, 822, 958), wobei die Anforderung mindestens eine E-Mail-Adresse mindestens eines zweiten Benutzers (152, 252, 834, 968) und spezifizierte Daten (306) umfasst, die von dem ersten Benutzer (152, 252, 834, 968) ausgewählt werden und die in dem entfernten Datenspeicher (130, 230, 820, 948) gespeichert sind;
Identifizieren der spezifizierten Daten in dem entfernten Datenspeicher (130, 230, 820, 948);
Bestimmen einer URL (Uniform Resource Locator), die einen Link zu einem webbasierten Viewer umfasst, der dazu ausgelegt ist, Zugriff zum Betrachten der spezifizierten Daten unter einer ersten Bedingung bereitzustellen, dass der erste Benutzer (152, 252) erste native Berechtigungen umfasst, die Zugriff zum Betrachten der spezifizierten Daten ermöglichen;
Generieren einer E-Mail, die die URL umfasst; und Senden der E-Mail unter Verwendung des Webservers (140, 240, 822, 958) an die mindestens eine E-Mail-Adresse.

2. Verfahren nach Anspruch 1, ferner umfassend:
Anfordern der spezifizierten Daten unter Verwendung des Webservers (140, 240, 822, 958) von einem Datendecodierer (136, 236, 954); und
Decodieren der spezifizierten Daten unter Verwendung des Datendecodierers (136, 236, 954).

3. Verfahren nach Anspruch 2, ferner umfassend:
Verarbeiten der spezifizierten Daten unter Verwendung eines Lokalisierers (138, 238, 956) in verarbeitete spezifizierte Daten, die eine vorbestimmte Sprache und mindestens eine vorbestimmte Messeinheit umfassen.

4. Verfahren nach Anspruch 1, ferner umfassend:
Speichern eines Datensatzes unter Verwendung eines Webclients (142, 242, 826, 962) in dem entfernten Datenrepository (130, 230, 820, 948), wobei der Datensatz mindestens eines von der E-Mail, der URL, den spezifizierten Daten, dem ersten Benutzer (152, 252) und dem mindestens einen zweiten Benutzer (834, 968) umfasst.

5. Verfahren nach Anspruch 1, wobei:
die mindestens eine Datenquelle an Bord des mobilen Assets (148, 248, 830, 964) mindestens eines von Analogeingängen (102, 202), Digitaleingängen (104, 204), Eingabe- und Ausgabemodulen, einer Fahrzeugsteuerung (108, 208), einer Motorsteuerung (110, 210), Trägheitssensoren (112, 212), einem globalen Positionierungssystem, mindestens einer Kamera (116, 216, 802, 940), Kraftstoffdaten (168, 268), Positive-Train-Control-Signaldaten (PTC-Signaldaten), einer 360-Grad-Kamera (116, 216, 802, 940), einer unbeweglichen Kamera (116, 216, 802, 940), einer Schmalsichtkamera (116, 216, 802, 940), einer Weitsichtkamera (116, 216, 802, 940) und einer 360-Grad-Fischaugensichtkamera (116, 216, 802, 940) umfasst und wobei die mindestens eine Datenquelle, die von dem mobilen Asset (148, 248, 830, 964) entfernt ist, mindestens eines von Kartenkomponenten (164, 264), einer Routen- und Crew-Manifestkomponente (124, 224), einer Wetterkomponente (126, 226, 936), einer 360-Grad-Kamera (116, 216, 802, 940), einer unbeweglichen Kamera (116, 216, 802, 940), einer Schmalsichtkamera (116, 216, 802, 940), einer Weitsichtkamera (116, 216, 802, 940) und einer 360-Grad-Fischaugensichtkamera (116, 216, 802, 940) umfasst; und
die Daten mindestens eines von Geschwindigkeit, Druck, Temperatur, Strom, Spannung, Beschleunigung von dem mobilen Asset (148, 248, 830, 964), Beschleunigung von entfernten mobilen Assets (148, 248, 830, 964), Schalterpositionen, Aktuatorpositionen, Warnlichtbeleuchtung, Aktuatorbefehlen, Position, Höhe, intern generierten Informationen, Videoinformationen, Audioinformationen, Route, Zeitplan, Frachtmanifestinformationen, Umgebungsbedingungen, aktuellen Wetterbedingungen und vorhergesagten Wetterbedingungen umfassen.

6. Verfahren nach Anspruch 1, ferner umfassend:
Anzeigen der spezifizierten Daten auf einem Webbrowser des mindestens einen zweiten Benutzers (834, 968), wenn der mindestens eine zweite Benutzer (834, 968) die in der E-Mail bereitgestellte URL unter einer zweiten Bedingung auswählt, dass der mindestens eine zweite Benutzer (834, 968) zweite native Berechtigungen umfasst, die Zugriff auf die spezifizierten Daten ermöglichen;
wobei optional ein Administrator die ersten nativen Berechtigungen des ersten Benutzers (152, 252) und die zweiten nativen Berechtigungen des mindestens einen zweiten Benutzers (834, 968) erhöhen und/oder verringern kann.

7. Verfahren nach Anspruch 1, wobei der erste Benutzer (152, 252) die URL mit einer Mehrzahl von entfernt angeordneten Empfänger-Endbenutzern (834, 968) teilen kann.

8. Verfahren nach Anspruch 1, wobei der mindestens eine zweite Benutzer (834, 968) kein vorab registriertes Konto haben muss.

9. System zum Verarbeiten, Speichern und Übertragen von Daten von mindestens einem mobilen Asset (148, 248, 830, 964), umfassend:
einen Datenaufzeichner (154, 254, 808, 902) an Bord des mobilen Assets (148, 248, 830, 964), der mindestens eine lokale Speicherkomponente, einen Datencodierer (122, 222, 814, 908), einen bordeigenen Datenmanager (120, 220, 812, 906) und ein Warteschlangenrepository (158, 258) umfasst, wobei der Datenaufzeichner (154, 254, 808, 902) dazu ausgelegt ist, die Daten basierend auf mindestens einem Datensignal von mindestens einem von Folgenden zu empfangen:
mindestens einer Datenquelle an Bord des mobilen Assets (148, 248, 830, 964); und
mindestens einer Datenquelle, die von dem mobilen Asset (148, 248, 830, 964) entfernt ist;
wobei der Datencodierer (122, 222, 814, 908) dazu ausgelegt ist, eine vorbestimmte Menge der Daten in codierte Daten zu codieren;
der bordeigene Datenmanager (120, 220, 812, 906) zu Folgendem ausgelegt ist:
Anhängen der codierten Daten an ein Datensegment;
Speichern mindestens eines von den codierten Daten und dem Datensegment mit einer konfigurierbaren ersten vorbestimmten Rate in mindestens einem von einer lokalen Speicherkomponente und dem Warteschlangenrepository (158, 258); und
Senden mindestens eines von den codierten Daten und dem Datensegment über einen drahtlosen Datenlink (146, 246, 816, 944) mit einer konfigurierbaren zweiten vorbestimmten Rate an einen entfernten Datenmanager (132, 232, 818, 946), wobei die zweite vorbestimmte Rate im Bereich von null Sekunden bis einschließlich fünf Minuten liegt, wobei der entfernte Datenmanager (132, 232, 818, 946) dazu ausgelegt ist, mindestens eines von den codierten Daten und/oder dem Datensegment in einem entfernten Datenrepository (130, 230, 820, 948) zu speichern; und
einen Webserver (140, 240, 822, 958), der dazu ausgelegt ist, eine Anforderung von einem ersten Benutzer (152, 252) zu empfangen, eine URL (Uniform Resource Locator) zu bestimmen, die einen Link zu einem webbasierten Viewer umfasst, der dazu ausgelegt ist, Zugriff zum Betrachten spezifizierter Daten (306) bereitzustellen, die von dem ersten Benutzer (152, 252) unter einer ersten Bedingung ausgewählt werden, dass der erste Benutzer (152, 252) erste native Berechtigungen umfasst, die Zugriff auf die spezifizierten Daten ermöglichen, eine E-Mail, die die URL umfasst, zu generieren und die E-Mail an mindestens eine E-Mail-Adresse mindestens eines zweiten Benutzers (834, 968) zu senden, wobei die Anforderung die mindestens eine E-Mail-Adresse des mindestens einen zweiten Benutzers (834, 968) und die spezifizierten Daten umfasst, die in dem entfernten Datenrepository (130, 230, 820, 948) gespeichert sind.

10. System nach Anspruch 9, ferner umfassend:
einen entfernten Datendecodierer (136, 236, 954), der dazu ausgelegt ist, die spezifizierten Daten in decodierte Daten zu decodieren.

11. System nach Anspruch 9, ferner umfassend:
einen Lokalisierer (138, 238, 956), der dazu ausgelegt ist, die spezifizierten Daten in verarbeitete spezifizierte Daten (306) zu verarbeiten, die eine vorbestimmte Sprache und mindestens eine vorbestimmte Messeinheit umfassen.

12. System nach Anspruch 9, ferner umfassend:
einen Webclient (142, 242, 826, 962), der dazu ausgelegt ist, einen Datensatz in dem entfernten Datenrepository (130, 230, 820, 948) zu speichern, wobei der Datensatz mindestens eines von der E-Mail, der URL, den spezifizierten Daten, dem ersten Benutzer (152, 252) und dem mindestens einen zweiten Benutzer (834, 968) umfasst.

13. System nach Anspruch 9, ferner umfassend: einen Webbrowser, der dazu konfiguriert ist, die spezifizierten Daten anzuzeigen, wenn der mindestens eine zweite Benutzer (834, 968) die in der E-Mail bereitgestellte URL unter einer zweiten Bedingung auswählt, dass der mindestens eine zweite Benutzer (834, 968) zweite native Berechtigungen umfasst, die Zugriff zum Betrachten der spezifizierten Daten ermöglichen; und
wobei optional ein Administrator dazu konfiguriert ist, die ersten nativen Berechtigungen des ersten Benutzers (152, 252) und die zweiten nativen Berechtigungen des mindestens einen zweiten Benutzers (834, 968) zu erhöhen und/oder zu verringern.

14. System nach Anspruch 9, wobei der erste Benutzer (152, 252) die URL mit einer Mehrzahl von entfernt angeordneten Empfänger-Endbenutzern (834, 968) teilen kann.

15. System nach Anspruch 9, wobei der mindestens eine zweite Benutzer (834, 968) kein vorab registriertes Konto haben muss.

16. System nach Anspruch 9, ferner umfassend:
einen ersten Webclient, der dazu ausgelegt ist, die Anforderung für spezifizierte Daten an den Webserver zu senden;
wobei der Webserver dazu ausgelegt ist, die spezifizierten Daten von einem Datendecodierer anzufordern;
der Datendecodierer dazu ausgelegt ist, die spezifizierten Daten in decodierte spezifizierte Daten zu decodieren; und
einen Lokalisierer, der dazu ausgelegt ist, die decodierten spezifizierten Daten in verarbeitete spezifizierte Daten zu verarbeiten, die eine vorbestimmte Sprache und mindestens eine vorbestimmte Messeinheit umfassen.

17. Verfahren nach Anspruch 1, ferner umfassend:
Senden der Anforderung für die spezifizierten Daten von einem ersten Webclient des ersten Benutzers an den Webserver;
Anfordern der spezifizierten Daten unter Verwendung des Webservers von einem Datendecodierer;
Decodieren der spezifizierten Daten unter Verwendung des Datendecodierers in decodierte spezifizierte Daten; und
Verarbeiten der decodierten spezifizierten Daten unter Verwendung eines Lokalisierers in verarbeitete spezifizierte Daten, die eine vorbestimmte Sprache und mindestens eine vorbestimmte Messeinheit umfassen.

18. System nach Anspruch 9, ferner umfassend:
mindestens einen zweiten Webclient, der dazu ausgelegt ist, die spezifizierten Daten auf einem Webbrowser des mindestens einen zweiten Benutzers anzuzeigen, wenn der mindestens eine zweite Benutzer die in der E-Mail bereitgestellte URL unter der Bedingung auswählt, dass der mindestens eine zweite Benutzer zweite native Berechtigungen umfasst, die Zugriff zum Betrachten der spezifizierten Daten ermöglichen.

## Revendications

1. Procédé pour le traitement, le stockage, et la transmission de données depuis au moins un actif mobile (148, 248, 830, 964) comprenant :
la réception, en utilisant un enregistreur de données (154, 254, 808, 902) à bord de l'actif mobile (148, 248, 830, 964), de données (306) sur la base d'au moins un signal de données provenant :
d'au moins une source de données à bord de l'actif mobile (148, 248, 830, 964) ; et/ou
d'au moins une source de données à distance de l'actif mobile (148, 248, 830, 964) ;
le codage, en utilisant un codeur de données (122, 222, 814, 908) de l'enregistreur de données (154, 254, 808, 902), d'une quantité prédéterminée des données en données codées ;
l'ajout, en utilisant un gestionnaire de données à bord (120, 220, 812, 906) de l'enregistreur de données (154, 254, 808, 902), des données codées à un segment de données ;
le stockage, en utilisant le gestionnaire de données à bord (120, 220, 812, 906) de l'enregistreur de données (154, 254, 808, 902), des données codées et/ou du segment de données à une première cadence prédéterminée configurable dans un composant de mémoire local de l'enregistreur de données (154, 254, 808, 902) et/ou un référentiel de mise en file d'attente de l'enregistreur de données (154, 254, 808, 902) ;
l'envoi, en utilisant le gestionnaire de données à bord (120, 220, 812, 906), des données codées et/ou du segment de données à un gestionnaire de données à distance (132, 232, 818, 946) par l'intermédiaire d'une liaison de données sans fil (146, 246, 816, 944) à une seconde cadence prédéterminée configurable, dans lequel la seconde cadence prédéterminée est dans la plage de zéro seconde à cinq minutes, incluses ;
le stockage, en utilisant le gestionnaire de données à distance (132, 232, 818, 946), des données codées et/ou du segment de données dans un référentiel de données à distance (10, 15, 130, 230, 820, 948) ;
la réception, en utilisant un serveur Web (140, 240, 822, 958), d'une demande en provenance d'un premier utilisateur (152, 252, 834, 968), la demande comprenant au moins une adresse de courrier électronique d'au moins un second utilisateur (152, 252, 834, 968) et des données spécifiées (306) sélectionnées par le premier utilisateur (152, 252, 834, 968) stockées dans le référentiel de données à distance (130, 230, 820, 948) ;
l'identification des données spécifiées dans le référentiel de données à distance (130, 230, 820, 948) ;
la détermination d'une adresse universelle (« Uniform Resource Locator », URL) comprenant une liaison à un visualiseur à base Web adapté pour fournir un accès pour visualiser les données spécifiées à une première condition que le premier utilisateur (152, 252) comprenne des premières permissions natives permettant l'accès pour visualiser les données spécifiées ;
la génération d'un courrier électronique comprenant l'URL ; et
l'envoi, en utilisant le serveur Web (140, 240, 822, 958), du courrier électronique à l'au moins une adresse de courrier électronique.

2. Procédé de la revendication 1, comprenant en outre :
la demande, en utilisant le serveur Web (140, 240, 822, 958), des données spécifiées auprès d'un décodeur de données (136, 236, 954) ; et
le décodage, en utilisant le décodeur de données (136, 236, 954), des données spécifiées.

3. Procédé de la revendication 2, comprenant en outre : le traitement, en utilisant un localisateur (138, 238, 956), des données spécifiées en données spécifiées traitées comprenant un langage prédéterminé et au moins une unité de mesure prédéterminée.

4. Procédé de la revendication 1, comprenant en outre : le stockage, en utilisant un client Web (142, 242, 826, 962), d'un enregistrement dans le référentiel de données à distance (130, 230, 820, 948), l'enregistrement comprenant au moins un élément parmi le courrier électronique, l'URL, les données spécifiées, le premier utilisateur (152, 252), et l'au moins un second utilisateur (834, 968).

5. Procédé de la revendication 1, dans lequel :
l'au moins une source de données à bord de l'actif mobile (148, 248, 830, 964) inclut au moins un élément parmi des entrées analogiques (102, 202), des entrées numériques (104, 204), des modules d'entrée et de sortie, une unité de commande de véhicule (108, 208), une unité de commande de moteur (110, 210), des capteurs inertiels (112, 212), un système de positionnement mondial, au moins une caméra (116, 216, 802, 940), des données de carburant (168, 268), des données de signal de commande intégrale des trains (« Positive Train Control », PTC), une caméra à 360 degrés (116, 216, 802, 940), une caméra fixe (116, 216, 802, 940), une caméra à angle étroit (116, 216, 802, 940), une caméra à grand angle (116, 216, 802, 940), et une caméra à angle œil-de-poisson à 360 degrés (116, 216, 802, 940), et dans lequel l'au moins une source de données à distance de l'actif mobile (148, 248, 830, 964) inclut au moins un élément parmi des composants cartographique (164, 264), un composant de route et de manifeste d'équipage (124, 224), un composant météorologique (126, 226, 936), une caméra à 360 degrés (116, 216, 802, 940), une caméra fixe (116, 216, 802, 940), une caméra à angle étroit (116, 216, 802, 940), une caméra à grand angle (116, 216, 802, 940), et une caméra à angle œil-de-poisson à 360 degrés (116, 216, 802, 940) ; et
les données incluent au moins un élément parmi une vitesse, une pression, une température, un courant, une tension, une accélération de l'actif mobile (148, 248, 830, 964), une accélération d'actifs mobiles à distance (148, 248, 830, 964), des positions d'aiguillage, des positions d'actionneur, un éclairage de voyant d'avertissement, des commandes d'actionneur, une position, une altitude, des informations générées de façon interne, des informations vidéo, des informations audio, une route, un horaire, des informations de manifeste de marchandises, des conditions environnementales, des conditions météorologiques actuelles, et des conditions météorologiques prévues.

6. Procédé de la revendication 1, comprenant en outre :
l'affichage des données spécifiées sur un navigateur Web de l'au moins un second utilisateur (834, 968) lorsque l'au moins un second utilisateur (834, 968) sélectionne l'URL fournie dans le courrier électronique à une seconde condition que l'au moins un second utilisateur (834, 968) comprenne des secondes permissions natives permettant l'accès aux données spécifiées ;
facultativement, dans lequel un administrateur peut augmenter et/ou réduire les premières permissions natives du premier utilisateur (152, 252) et les secondes permissions natives de l'au moins un second utilisateur (834, 968).

7. Procédé de la revendication 1, dans lequel le premier utilisateur (152, 252) peut partager l'URL avec une pluralité d'utilisateurs finaux destinataires situés à distance (834, 968).

8. Procédé de la revendication 1, dans lequel l'au moins un second utilisateur (834, 968) n'a pas besoin d'avoir un compte préenregistré.

9. Système pour le traitement, le stockage, et la transmission de données depuis au moins un actif mobile (148, 248, 830, 964) comprenant :
un enregistreur de données (154, 254, 808, 902) à bord de l'actif mobile (148, 248, 830, 964) comprenant au moins un composant de mémoire local, un codeur de données (122, 222, 814, 908), un gestionnaire de données à bord (120, 220, 812, 906), et un référentiel de mise en file d'attente (158, 258), l'enregistreur de données (154, 254, 808, 902) étant adapté pour recevoir les données sur la base d'au moins un signal de données provenant :
d'au moins une source de données à bord de l'actif mobile (148, 248, 830, 964) ; et/ou
d'au moins une source de données à distance de l'actif mobile (148, 248, 830, 964) ;
le codeur de données (122, 222, 814, 908) adapté pour coder une quantité prédéterminée des données en données codées ;
le gestionnaire de données à bord (120, 220, 812, 906) adapté pour :
ajouter les données codées à un segment de données ;
stocker les données codées et/ou le segment de données à une première cadence prédéterminée configurable dans l'au moins un composant de mémoire local et/ou le référentiel de mise en file d'attente (158, 258) ; et
envoyer les données codées et/ou le segment de données à un gestionnaire de données à distance (132, 232, 818, 946) par l'intermédiaire d'une liaison de données sans fil (146, 246, 816, 944) à une seconde cadence prédéterminée configurable, dans lequel la seconde cadence prédéterminée est dans la plage de zéro seconde à cinq minutes, incluses, le gestionnaire de données à distance (132, 232, 818, 946) étant adapté pour stocker les données codées et/ou le segment de données dans un référentiel de données à distance (130, 230, 820, 948) ; et
un serveur Web (140, 240, 822, 958) adapté pour recevoir une demande en provenance d'un premier utilisateur (152, 252), déterminer une adresse universelle (« Uniform Resource Locator », URL) comprenant une liaison à un visualiseur à base Web adapté pour fournir un accès pour visualiser des données spécifiées (306) sélectionnées par le premier utilisateur (152, 252) à une première condition que le premier utilisateur (152, 252) comprenne des premières permissions natives permettant l'accès aux données spécifiées, générer un courrier électronique comprenant l'URL, et envoyer le courrier électronique à au moins une adresse de courrier électronique d'au moins un second utilisateur (834, 968), la demande comprenant l'au moins une adresse de courrier électronique de l'au moins un second utilisateur (834, 968) et les données spécifiées stockées dans le référentiel de données à distance (130, 230, 820, 948).

10. Système de la revendication 9, comprenant en outre : un décodeur de données à distance (136, 236, 954) adapté pour décoder les données spécifiées en données décodées.

11. Système de la revendication 9, comprenant en outre : un localisateur (138, 238, 956) adapté pour traiter les données spécifiées en données spécifiées traitées (306) comprenant un langage prédéterminé et au moins une unité de mesure prédéterminée.

12. Système de la revendication 9, comprenant en outre : un client Web (142, 242, 826, 962) adapté pour stocker un enregistrement dans le référentiel de données à distance (130, 230, 820, 948), l'enregistrement comprenant au moins un élément parmi le courrier électronique, l'URL, les données spécifiées, le premier utilisateur (152, 252), et l'au moins un second utilisateur (834, 968).

13. Système de la revendication 9, comprenant en outre :
un navigateur Web configuré pour afficher les données spécifiées lorsque l'au moins un second utilisateur (834, 968) sélectionne l'URL fournie dans le courrier électronique à une seconde condition que l'au moins un second utilisateur (834, 968) comprenne des secondes permissions natives permettant l'accès pour visualiser les données spécifiées ; et
facultativement, dans lequel un administrateur est configuré pour augmenter et/ou réduire les premières permissions natives du premier utilisateur (152, 252) et les secondes permissions natives de l'au moins un second utilisateur (834, 968).

14. Système de la revendication 9, dans lequel le premier utilisateur (152, 252) peut partager l'URL avec une pluralité d'utilisateurs finaux destinataires situés à distance (834, 968).

15. Système de la revendication 9, dans lequel l'au moins un second utilisateur (834, 968) n'a pas besoin d'avoir un compte préenregistré.

16. Système de la revendication 9, comprenant en outre :
un premier client Web adapté pour envoyer la demande de données spécifiées au serveur Web ;
le serveur Web étant adapté pour demander les données spécifiées auprès d'un décodeur de données ;
le décodeur de données étant adapté pour décoder les données spécifiées en données spécifiées décodées ; et
un localisateur adapté pour traiter les données spécifiées décodées en données spécifiées traitées comprenant un langage prédéterminé et au moins une unité de mesure prédéterminée.

17. Procédé de la revendication 1, comprenant en outre :
l'envoi de la demande des données spécifiées, depuis un premier client Web du premier utilisateur, au serveur Web ;
la demande, en utilisant le serveur Web, des données spécifiées auprès d'un décodeur de données ;
le décodage, en utilisant le décodeur de données, des données spécifiées en données spécifiées décodées ; et
le traitement, en utilisant un localisateur, des données spécifiées décodées en données spécifiées traitées comprenant un langage prédéterminé et au moins une unité de mesure prédéterminée.

18. Système de la revendication 9, comprenant en outre : au moins un second client Web adapté pour afficher les données spécifiées sur un navigateur Web de l'au moins un second utilisateur lorsque l'au moins un second utilisateur sélectionne l'URL fourni dans le courrier électronique à condition que l'au moins un second utilisateur comprenne des secondes permissions natives permettant l'accès pour visualiser les données spécifiées.
